# EUROPÄISCHE PATENTSCHRIFT

(11) **EP 3 983 149 B1**
(45) Veröffentlichungstag und Bekanntmachung des Hinweises auf die Patenterteilung: **25.09.2024**
(21) Anmeldenummer: 20724750.3
(22) Anmeldetag: 20.04.2020
(51) Int. Cl.: B21H 3/02, B21J 5/12, B21K 1/46, B21K 1/56, B21K 1/64, F01M 11/04, F16B 33/00, F16B 43/00, F16L 55/11

(54) **VERFAHREN ZUR HERSTELLUNG EINES SCHRAUBELEMENTROHLINGS SOWIE EINES SCHRAUBELEMENTS UND SCHRAUBELEMENTROHLING SOWIE SCHRAUBELEMENT**
METHOD FOR PRODUCING A SCREW ELEMENT BLANK AND A SCREW ELEMENT, SCREW ELEMENT BLANK AND SCREW ELEMENT
PROCÉDÉ DE FABRICATION D'UNE FORME DE DÉPART D'ÉLÉMENT DE VISSERIE AINSI QUE D'UN ÉLÉMENT DE VISSERIE, ET FORME DE DÉPART D'ÉLÉMENT DE VISSERIE AINSI QU'ÉLÉMENT DE VISSERIE

(30) Priorität: 17.06.2019 DE 102019116338
(43) Veröffentlichungstag der Anmeldung: 20.04.2022
(73) Patentinhaber: SF Handels- und Besitzgesellschaft mbH, 78554 Aldingen (DE)
(72) Erfinder: FLAIG, Hartmut, 78554 Aldingen (DE)
(74) Vertreter: Patent- und Rechtsanwälte Behrmann Wagner PartG mbB
(86) Internationale Anmeldenummer: PCT/EP2020/061011
(87) Internationale Veröffentlichungsnummer: WO 2020/254011

(56) Entgegenhaltungen:
- WO-A1-2004/054739
- WO-A1-2005/099930
- WO-A1-2019/105556
- DE-A1- 102006 046 631
- DE-A1- 102011 107 236
- DE-A1- 102014 118 342
- DE-U1- 202013 105 922

## Beschreibung

Die Erfindung betrifft ein Verfahren zur Herstellung eines Schraubelementrohlings sowie zum Herstellen eines Schraubelements nach dem Oberbegriff des Anspruchs 1. Ferner betrifft die vorliegende Erfindung einen Schraubelementrohling gemäß Anspruch 17 sowie ein Schraubelement gemäß Anspruch 24.

In der Verbindungs- und Verschlusstechnik werden unter anderem Schrauben und Muttern eingesetzt um Bauteile miteinander zu verbinden und Öffnungen zu verschließen. Vorliegend wird ein erfinderisches Konzept beschrieben, welches sowohl bei Schrauben, insbesondere Verschluss oder Dichtschrauben, als auch bei Muttern, insbesondere Befestigungsmuttern mit/für definiertem Reibwerten, zum Einsatz kommen kann

Bezüglich der Schrauben als Schraubelemente sind aus dem Stand der Technik verschiedene Dichtschrauben oder Verschlussschrauben sowie deren Vorstufen, insbesondere Rohlinge oder Halbzeuge bekannt. Die bekannten Dichtschrauben oder Verschlussschrauben werden bevorzugt, keinesfalls jedoch ausschließlich, als Ölablassschrauben eingesetzt, welche zur Abdichtung einer Innengewindeöffnung in einem Aufnahmekörper, insbesondere zum Abdichten einer Flüssigkeitsleitung oder zum Abdichten eines Flüssigkeitsgefäßes, vorzugsweise in einer Ölleitung oder in einem Ölbehälter zum Einsatz kommen, wobei die Ölleitung oder der Ölbehälter bevorzugt einem Getriebe oder Getriebegehäuse eines Verbrennungsmotors zugeordnet ist. Die Verschlussschrauben oder Dichtschrauben werden dabei mit einem Außengewinde versehen, insbesondere mit einem zylindrischen Schaft mit einem dort befindlichen Außengewinde versehen, mit welcher eine Verschraubung mit einem Innengewinde einer Innengewindeöffnung des besagten Aufnahmekörpers erfolgt.

Bei den bekannten Verschlussschrauben oder Dichtschrauben, welche nachfolgend durchgängig als Dichtschrauben bezeichnet werden sollen, hat es sich als besonders vorteilhaft bezüglich der Dichtwirkung zwischen der Dichtschraube und dem Aufnahmekörper herausgestellt, wenn die Dichtschraube am Übergang zwischen dem das Außengewinde aufweisenden Schaft und einem an den Schaft angrenzenden Kopf einen Hinterschnitt oder Hinterstich aufweist, der in besonders vorteilhafter Weise erreicht oder ermöglicht, dass der Kopf oder Schraubenkopf, insbesondere eine dem Schaft zugewandte Dichtfläche des Schraubenkopfes dichtend an einer entsprechenden Gegenfläche der Aufnahmeöffnung oder des Aufnahmekörpers zur Anlage kommt.

Für die Herstellung des entsprechenden Hinterschnitts oder Hinterstichs am Übergang zwischen dem Schaft und dem Kopf oder Schraubenkopf haben sich verschiedene Herstellungstechniken bewährt. Einerseits besteht die Möglichkeit den Hinterschnitt oder Hinterstich im Rahmen einer spanenden Bearbeitung eines Rohlings herzustellen, beispielsweise bevor auf den zylindrischen Schaft ein Gewinde eingebracht, insbesondere eingeschnitten, wird. Mit dieser Vorgehensweise kann der Hinterschnitt zwar relativ sicher und unabhängig von der sonstigen Form oder Geometrie der zu erzeugenden Dichtschraube in dem Rohling oder in die Schraube eingebracht werden, es bedarf dazu jedoch, wie bereits erwähnt, eines spanenden Bearbeitungsschrittes, der entsprechend mit Materialverlust einhergeht und der zudem ein weiteres, entsprechend aufwendiges Einspannen und Drehen der Schraube oder des Schraubenrohlings voraussetzt. Andererseits erlaubt die spanende Bearbeitung des Dichtschraubenrohlings oder der Dichtschraube zur Erzeugung des Hinterschnitts jedoch größtmögliche Freiheit bei der sonstigen Ausgestaltung und Ausformung der Dichtschraube.

Alternative Techniken zur Herstellung einer gattungsgemäßen Dichtschraube als Schraubelement sowie eines entsprechenden Rohlings sind im Bereich des Kaltfließpressens bekannt. Beispielsweise sind aus der DE 20 2013 105 922 U1, der DE 10 2006 046 631 A1 und aus der WO 2004/054739, welche alle auf die Anmelderin zurückgehen, Dichtschrauben sowie Verfahren zur Herstellung von Dichtschraubenrohlingen und Dichtschrauben bekannt, bei denen mittels Kaltfließpressen nicht nur aber insbesondere auch der oben thematisierte Hinterschnitt am Übergang zwischen dem zylindrischen Schaft der Schraube und dem Schraubenkopf erzeugt wird. Der Vorteil an den Verfahren zur Herstellung von Dichtschraubenrohlingen und Dichtschrauben unter Anwendung von Kaltfließpressen besteht einerseits in der optimierten oder verlustfreien Materialnutzung und andererseits im Einsparen von zusätzlichen Verfahrensschritten, insbesondere Verfahrensschritten zum Einspannen, Drehen und spanenden Bearbeiten von Schrauben oder Schraubenrohlingen. Dementsprechend zeichnen sich auch die resultierenden Dichtschrauben und Dichtschraubenrohlinge aus. Die WO 2004/054739 bildet die Basis für den Oberbegriff der Ansprüche 1 und 17.

Die WO 2019/105556 A1 offenbart eine mehrteilige Dichtschraube umfassend ein Schraubelement mit einem Pressabschnitt, sowie ein separates Abdeckelement (70). Das Abdeckelement ist derart konfiguriert, um mit dem Schraubelement verbunden zu werden und um den Pressabschnitt mit Dichtungselement an eine seitliche Wand einer zu dichtenden Durchgangsbohrung zu drücken.

Die DE 10 2014 118 342 A1 zeigt ein Verfahren zur Herstellung einer Schraubeinheit umfassend ein Schraubelement mit einem Schaft und einem radial über den Schaft hinaus ragenden Kopf, sowie eine von einer zentralen Durchgangsöffnung durchsetzten Scheibe, wobei am Schaft ein radial vorstehendes Hintergriffselement vorhanden ist, mit folgenden Schritten: a) es wird ein Scheibenrohling mit einer Durchgangsöffnung bereitgestellt, deren Durchmesser größer ist als der Durchmesser des Hintergriffselements, b) der bereits mit einem Fixierelement versehene Schaft wird so weit in die Durchgangsöffnung eingesteckt, dass diese von einem sich von dem Kopf weg erstreckenden ersten Schaftabschnitt durchgriffen ist, c) durch eine radial nach innen gerichtete plastische Verformung zumindest eines Teils des Randbereichs des Scheibenrohlings wird die Durchgangsöffnung unter Ausbildung einer radialen Überlappung zwischen dem Hintergriffselement und dem Randbereich der Scheibe verkleinert.

Bisher war man jedoch im Stand der Technik von einer Beschränkung entsprechender Dichtschrauben oder Dichtschraubenrohlinge ausgegangen, welche sich auf die Herstellung oder Ausprägung des Hinterschnitts zwischen Schraubenschaft und Schraubenkopf bezieht und mit den Grundlagen des Kaltfließpressens verknüpft ist. So wurde bisher davon ausgegangen, dass zum Erzeugen einer entsprechenden Flanke oder Verjüngung im Schaft der Schraube oder des Schraubenrohlings zur Ausbildung des Hinterstichs im jeweiligen Kaltfließpressumformungsschritt oder Fließverformungsschritt zum jeweiligen Abschluss des Bearbeitungsschrittes einerseits eine einseitige, insbesondere in axialer Richtung verlaufende, Entnahme der Schraube oder des Schraubenrohlings aus einem Werkzeug gegebenen sein muss und andererseits der Außenumfang des Schaftes, insbesondere die die Verjüngung oder die die Hinterschneidung ausbildende, verformte Außenoberfläche vollständig an einem die Schraube oder den Schraubenrohling aufnehmenden und die Verformung begrenzenden Werkzeug zur Anlage kommen muss.

Dies wiederum führt dazu, dass bei den Dichtschrauben und Dichtschraubenrohlingen, wie sie oben genannt wurden und welche mit Verfahren der Kaltmassivumformung, insbesondere des Kaltfließpressens hergestellt wurden, eine Aufweitung des zylindrischen Schaftes der Schraube und des Rohlings in einem vom Schraubenkopf abgewandten Ende des Schaftes erzeugt wurde, die wiederum mit zunehmender Nähe zum Schraubenkopf abnahm und entsprechend den Hinterschnitt ausbildet, wobei die Aufweitung aufgrund der oben beschriebenen Limitierungen jeweils durch ein Ausbilden einer Vertiefung oder eines Sackloches auf der dem Schraubenkopf abgewandten Ende des Schaftes der Stirnfläche realisiert und durch die damit einhergehende Materialumformung, der Hinterschnitt ausgebildet wurde. Somit wurde radial angrenzend an die schaftseitige Vertiefung die Aufweitung und eine entsprechende Anlage an ein Werkzeug verursacht, wobei in einem nicht verformten oder aufgeweiteten Bereich des Schafts keine Anlage an das Werkzeug erfolgte.

Da jedoch zunehmend auch Dichtschrauben gewünscht oder benötigt werden, welche den die Dichtheit positiv beeinflussenden Hinterschnitt zwischen Schaftende und Schraubenkopf aufweisen, gleichzeitig aber an dem vom Schraubenkopf abgewandten Ende des Schraubenschaftes eine ebene Fläche, insbesondere eine ebene Stirnfläche oder sogar einen von einer Stirnfläche sich vom Schraubenkopf wegerstreckenden Fortsatz, aufweisen sollen, war die Herstellung derartiger Dichtschrauben sowie deren Rohlinge mittels Kaltfließpressen nicht möglich.

Hinsichtlich der als Schraubenmutterrohling und Schraubenmuttern aufgebildeten Schraubelementen sowie der entsprechenden Verfahren sind aus dem Stand der Technik, beispielsweise aus der DE 10 2011 107 236 A1 Muttern oder Schraubelemente bekannt, die eine besonders platzsparende Befestigung eines in eine Einschrauböffnung der Mutter eingeschraubtes Bauteil, beispielsweise ein Lenkelement, besonders bevorzugt einen oberen Querlenker eines Kfz an einem korresponierenden Befestigungselement ermöglichen. Die Schraubenelemente in Form von Schraubenmuttern können ebenfalls mittels Kaltfließpressen hergestellt werden. Der Vorteil an den Verfahren zu deren Herstellung unter Anwendung von Kaltfließpressen besteht ebenfalls in der optimierten oder verlustfreien Materialnutzung und andererseits im Einsparen von zusätzlichen Verfahrensschritten, insbesondere Verfahrensschritten zum Einspannen, Drehen und spanenden Bearbeiten von Muttern oder Schraubenmuttern. Dementsprechend zeichnen sich auch die resultierenden Dichtschrauben und Dichtschraubenrohlinge aus.

Das Grundproblem bei derartigen Muttern oder Schraubelementen ist die nicht zufriedenstellende Einstellbarkeit oder nicht ausreichende Vorhersehbarkeit der Reibwerte der Verbindung, insbesondere der Reibwerte zwischen dem Schraubelement oder der Mutter und dem Befestigungselement. Um die Reibwerte besser kontrollieren zu können haben sich verschiedene Ansätze etabliert, von denen einer die Verwendung einer Unterlegscheibe vorsieht.

Bei der Verwendung einer Unterlegscheibe ist hinsichtlich der Herstellung der Verbindung zwischen Mutter, Schraubelement und Befestigungselement der Wunsch gegeben die Unterlegscheibe verliersicher oder verlustsicher an der Mutter zu befestigen. Zu diesem Sicherungszweck der Unterlegscheibe gegenüber der Mutter oder dem Schraubelement hat sich ebenfalls ein Hinterschnitt oder Hinterstich in einem Übergangsbereich zwischen einem Kopf oder Mutterkopf und einem Schaft oder Mutterschaft als vorteilhaft ergeben, da dann der Durchmesser des Schafts so gewählt werden kann, dass er geringfüfig größer ausfällt als der Innendurchmesser der Unterlegscheibe und der Außendurchmesser des Hinterstichs oder Hinterschnitts geringfügig kleiner ausfällt als der Innendurchmesser der Unterlegscheibe, so dass im Bereich des Hinterschnitts die Unterlegscheibe verlustsicher gesichert oder angeordnet werden kann.

Hierbei besteht, wie auch bei den oben bereits genannten Schraubelementen, bevorzugt Schrauben, insbesondere Dichtschrauben, das Problem, dass es aus verfahrenstechnischen Gründen wünschenswert ist die von einem Kopf oder Mutterkopf abgewandte Stirnseite des Schaftes oder Mutterschaftes, insbesondere vor der Herstellung der Einschrauböffnung wenig oder gar nicht zu verformen. Dadurch entsteht jedoch in ähnlichem Maße, wie bei den oben genannten Schrauben oder Dichtschrauben das Problem, dass der Hinterstich nicht ohne Probleme oder zusätzliche aufwändige, insbesondere spanende, Bearbeitungsschritte ausgebildet werden kann.

Dementsprechend liegt die Aufgabe der vorliegenden Erfindung darin Schraubelemente und Schraubelementrohlinge sowie Verfahren zu deren Herstellung anzugeben, bei denen die Dichtschrauben einerseits eine ebene oder mit einem Fortsatz versehene vom Kopf abgewandte Fläche oder Stirnfläche aufweisen, gleichzeitig den die Dichtwirkung oder die Sicherungswirkung verbessernden Hinterschnitt zwischen dem Schaft und dem Kopf aufweisen und mit Mitteln der Kaltmassivumformung, insbesondere des Kaltfließpressens, bevorzugt ohne spanende Bearbeitungsschritte, herstellbar sind.

Bei einem Verfahren zur Herstellung eines Schraubelements oder eines Schraubelementrohlings umfassend einen Verfahrensschritt, in dem ein Rohling mit einem an einem Kopf angeformten zylindrischen Schaft erzeugt wird und wobei in dem Rohling von einer von dem Schaft abgewandten Oberseite des Kopfes in, insbesondere weiteren, Verfahrensschritten ein Sackloch ausgebildet wird, welches sich in Richtung des Schafts erstreckt und welches zumindest einen ersten Abschnitt, insbesondere mit einem mehreckigen Querschnitt, bevorzugt zur Aufnahme eines Schraubwerkzeuges oder einen runden Querschnitt als Vorstufe einer Einschrauböffnung ausbildet wird die oben genannte Aufgabe dadurch gelöst, dass in einem nachfolgenden Verfahrensschritt das kopfseitig bereits bestehende Sackloch unter Ausbildung zumindest eines zweiten, an den ersten Abschnitt angrenzenden Abschnitts vertieft wird, wobei der zweite Abschnitt einen bevorzugt zumindest abschnittsweise gleichbleibenden, insbesondere gegenüber dem ersten Querschnitt kleineren oder gleichbleibenden, Querschnitt ausbildet, wobei in dem nachgeordneten Verfahrensschritt der Schaft unter Ausbildung eines Hinterschnitts am Übergang zwischen Schaft und Kopf, durch zumindest mittelbare Materialverdrängung aus zumindest dem zweiten Abschnitt des Sacklocks, abschnittsweise aufgeweitet wird.

Der vorliegenden Erfindung liegt somit der Gedanke zugrunde, dass gerade durch die Überwindung der oben skizzierten Annahmen oder Vorurteile hinsichtlich der Limitierungen des Kaltfließpressens, eine Aufweitung zusammen mit der Ausbildung eines entsprechenden Hinterschnitts zwischen dem, zumindest abschnittsweise aufgeweiteten Schaft und dem Kopf auch dadurch ermöglicht wird, dass eine rückseitige, also ein vom Kopf ausgehende Verformung, insbesondere Materialverdrängung, vorgenommen wird und gleichzeitig das Schraubelement oder der Schraubelementrohling nach dem nachgeordneten Verfahrensschritt trotzdem aus einem entsprechend den Rohling aufnehmenden Werkzeug, insbesondere in axialer Richtung des Rohlings, entnehmbar bleibt. Dies bedeutet mit anderen Worten ausgedrückt, dass mit der vorliegenden Erfindung mit in keinster Weise voraussehbarem Erfolg von den Grundprinzipien des Kaltmassivumformens, insbesondere des Kaltfließpressens, abgewichen wurde und eine Umformung in einer Richtung bzw. mit einer Neigung im Kaltfließpressen erreicht wurde, bei der gemäß dem klassischen oder bisherigen Verständnis der Limitierungen des Kaltfließpressens ein anschließendes Entnehmen des Schraubelements oder des Schraubelementrohlings aus dem den aufnehmenden Werkzeug schlicht unmöglich gewesen wäre. Damit wird in besonders vorteilhafter Weise erreicht, dass einerseits die Aufweitung nicht durch ein Verformen im Bereich einer vom Kopf abgewandten Stirnseite oder Stirnfläche des zylindrischen Schaftes erfolgen muss, und somit die entsprechende Stirnseite eben ausgebildet oder gar entsprechende vom Schraubenkopf weg ausgerichtete Fortsätze aufweisen kann. Außerdem wird damit erreicht, dass das Schraubelement oder der Schraubelementrohlinge weiter die besonders die Anwendung positiv beeinflussende Hinterschneidung am Übergang zwischen dem Schaft und dem Kopf aufweist oder aufweisen. Darüber hinaus wird ermöglicht die Schraubelemente oder Schraubelementrohlinge mittels Kaltfließpressen herzustellen. Dabei wird besonders vorteilhaft realisiert, dass in dem aufgeweiteten Abschnitt des Schafts eine Anlage und/oder eine Abstützung an ein Verformungswerkzeug erreicht wird, so dass die Aufweitung begrenzt und/oder eine definierte Oberfläche des Schaftes im aufgeweiteten Bereich erzeugt wird.

Gemäß einer ersten besonders vorteilhaften Ausführungsform des Verfahrens kann vorgesehen sein, dass der Schaft zumindest in einem dem Kopf gegenüberliegenden Bereich aufgeweitet wird. Dadurch wird in besonders vorteilhafter Weise ermöglicht, dass in diesem, nämlich dem Kopf gegenüberliegenden Bereich, in die Aufweitung oder in den Bereich der Aufweitung ein Gewinde eingeformt, insbesondere eingerollt wird, wohingegen in den weniger oder nicht aufgeweiteten Bereich des Schaftes, nämlich in einem Bereich des Schaftes, der dem Kopf zugewandt ist, das Gewinde nicht eingebracht wird und stattdessen der Hinterschnitt zur Verbesserung der Dichtheit zwischen Dichtschraube und Aufnahmekörper ausgebildet wird. Dabei ist gerade auch die Ausbildung der Aufweitung in dem vom Kopf abgewandten oder dem Kopf gegenüberliegenden Bereich des Schaftes ein Ausdruck der erfinderischen Leistung und des erfinderischen Abweichens von bekannten oder vermeintlich bekannten Restrektionen des Kaltfließpressens. Denn bei einem Erzeugen oder Aufweiten eines Sackloches aus Richtung oder aufseiten des Kopfes, und einer entsprechenden Aufweitung des Schaftes durch zumindest mittelbare Materialverdrängung aus dem eingebrachten oder erzeugten Sackloch, wäre zunächst davon auszugehen, dass bei einem entsprechenden Werkzeug, welches die Aufweitung des Schaftes zulässt oder vorsieht aber auch begrenzt, nach dem Umformen ein einfaches Entnehmen aus dem den Rohling oder Schraubelement aufnehmenden Werkzeug, also insbesondere ohne Zerteilung, Zerlegung oder sonstige Auseinandergliederung des Werkzeugs, besonders in axialer Richtung, schlichtweg nicht möglich gewesen wäre, da der Schaft an seinem vom Kopf abgewandten Ende einen größeren Durchmesser aufweist, als an dem am Kopf angrenzenden Abschnitt und dementsprechend eine Flanke oder eine Neigung erzeugt worden wäre, und von dem entsprechenden Werkzeug nachgebildet oder vielmehr vorgegeben werden müsste, mit der ein Entnehmen des Schraubelementrohlings oder des Schraubelements insbesondere durch einfaches Herausziehen oder Herausdrücken der in axialer Richtung der Mittelsymmetrieachse nicht möglich gewesen wäre, da einends der Kopf diese Bewegung nicht zugelassen hätte und andernends die Aufweitung des Schaftes zusammen mit der entsprechenden Flanke des Umformungswerkzeugs das Herausziehen oder Herausdrücken des Schraubenrohlings oder der Schraube unmöglich gemacht hätte. In diesem Zusammenhang sei noch erwähnt, dass das Werkzeug, welches die Schraube oder den Schraubenrohling zur Durchführung des nachgeordneten Verfahrensschritts aufnimmt, als, zumindest in Umfangsrichtung einteiliges Werkzeug ausgestaltet ist, sodass beispielsweise das radiale Öffnen von zwei oder mehr Werkzeugteilen nicht möglich ist oder nicht vorgesehen ist, um das Entnehmen oder die Entnahme des Schraubenrohlings oder der Schraube nach dem nachgeordneten Verfahrensschritt zu gewährleisten.

Dementsprechend kann in einer weiteren Variante des erfindungsgemäßen Verfahrens vorgesehen sein, dass nach dem Abschluss des nachgeordneten Verfahrensschritts ein Teil des aufgeweiteten Abschnitts an einem radialen Verformungswerkzeug oder Werkzeugteil anliegt, wohingegen der den Hinterschnitt ausbildende Teil des Schaftes gegenüber dem radialen Verformungswerkzeug oder Werkzeugteil in axialer Richtung des Kopfes einen zunehmenden Abstand aufweist. Mit dieser Ausführungsform wird wie oben bereits beschrieben von den bisherigen Prinzipien des Kaltfließpressens abgewichen, da das besagte Werkzeug oder das Werkzeugteil, welches den Schaft für den nachgeordneten Verfahrensschritt zumindest abschnittsweise oder teilweise aufnimmt nach Abschluss des nachgeordneten Verfahrensschritts eben nicht vollständig oder über die volle axiale Erstreckung des Schaftes an dem Schaft anliegt oder umgekehrt der Schaft an dem Werkzeug oder dem Werkzeugteil anliegt, wie bisher bei Klatfließpressvorgängen üblich, sondern dass vielmehr nur in einem axialen Endbereich, insbesondere in einem vom Kopf abgewandten axialen Endbereich des Schaftes die durch die Ausbildung und/oder Vertiefung des kopfseitigen Sackloches hervorgerufene mittelbare Materialverdrängung zu einer maximalen Aufweitung und damit zu einer Anlage zwischen aufgeweitetem zylindrischen Schaft und Werkzeug führt, wohingegen mit zunehmendem Abstand vom Endbereich des Schaftes, insbesondere mit zunehmendem Abstand von dem Kopf gegenüberliegenden Endbereich des Schaftes, ein zunehmender Abstand zwischen dem Werkzeug oder Werkzeugteil, insbesondere nach Abschluss des nachgeordneten Verfahrensschritts, bestehen bleibt, sodass hierdurch der Hinterschnitt zwischen dem Schaft und dem Kopf ausgebildet wird. Dies bedeutet mit anderen Worten ausgedrückt, dass es beispielsweise möglich ist für das Verfahren ein in Umfangsrichtung geschlossenes Werkzeug oder Werkzeugteil zur Aufnahme des Schaftes für den nachgeordneten Verfahrensschritt vorzusehen, welches eine ebene, in axialer Richtung gerade nicht geneigte Innenoberfläche oder Stützoberfläche aufweist oder ausbildet, sodass gerade die Nichtanlage oder der zunehmende Abstand zwischen dem Werkzeug und dem Rohling in axialer Richtung nach dem Abschluss des nachgeordneten Verfahrensschritts dafür sorgt, dass die Schraube oder der Schraubenrohling in einfacher Weise, insbesondere auch ohne Zerteilung oder Zergliederung des Werkzeugs oder Werkzeugteils in axialer Richtung aus dem Werkzeug oder Werkzeugteil entnommen, insbesondere gedrückt oder gezogen werden kann, obwohl der abschnittsweise aufgeweitete Schaftabschnitt vorliegt oder ausgebildet wurde, der durch eine kopfseitig eingebrachte Vertiefung in Form des zweiten Abschnitts des Sacklochs erzeugt wurde. Gleichzeitig ist vorteilhaft, dass bei einer in Umfangsrichtung geschlossenen Werkzeugform kein Grad im Bereich unterschiedlicher Werkzeugteile entsteht, der im Nachgang entfernt werden müsste.

Gemäß einer weiteren, besonders vorteilhaften Ausgestaltung des Verfahrens kann vorgesehen sein, dass im Rahmen des nachgeordneten Verfahrensschrittes eine vom Kopf abgewandte ebene Stirnfläche des Schaftes oder eine mit einem sich axial von der Stirnfläche wegerstreckenden Fortsatz versehene Stirnfläche des Schaftes beibehalten wird.

Dies bedeutet mit anderen Worten ausgedrückt, dass anstatt einer zur Ausbildung der Aufweitung in die Stirnseite oder Stirnfläche des Schaftes einzubringende Vertiefung oder Ausnehmung gerade jede andere Form, insbesondere eine ebene Form oder eine einen Fortsatz aufweisende Form der Stirnfläche des Schaftes mit dem erfindungsgemäßen Verfahren realisierbar wird. Damit kann in vorteilhafter Weise einerseits auf die Vorteile der Herstellung von Dichtschrauben und Dichtschraubenrohlingen im Rahmen von Kaltfließpressen zurückgegriffen werden, gleichzeitig aber auch die Form der Dichtschraube, insbesondere die Form der Stirnseite oder Stirnfläche des Schaftes der Dichtschraube weitestgehend frei gewählt und gleichermaßen der die Dichtheit positiv beeinflussende Hinterschnitt in dem Übergangsbereich zwischen Schaft und Schraubenkopf ausgebildet werden.

Gemäß einer weiteren, besonders bevorzugten Ausgestaltung des Verfahrens, insbesondere zur Herstellung einer Dichtschraube, kann vorgesehen sein, dass an einer dem Schaft zugewandten Unterseite des Kopfes eine ringförmige Dichtfläche zur Anlage an einer Auflagefläche eines Aufnahmekörpers unter Ausbildung einer koaxialen Ringnut, welche radial nach außen von einer umlaufenden Ringwand begrenzt ist, geformt wird. Durch die Ausbildung einer entsprechenden Dichtfläche wird das Dichtverhalten der Dichtschraube weiter vorteilhaft beeinflusst oder gesteigert. Bevorzugt kann vorgesehen sein, dass die entsprechende ringförmige Dichtfläche vor dem nachgeordneten Verfahrensschritt ausgebildet und im nachgeordneten Verfahrensschritt beibehalten wird. Alternativ kann jedoch auch vorgesehen sein, dass die Dichtfläche erst im nachgeordneten Verfahrensschritt, zusammen mit der Ausbildung oder Vertiefung des Sackloches geformt oder ausgeformt wird.

Gemäß einer weiteren vorteilhaften Ausgestaltung des Verfahrens, insbesondere im Hinblick auf ein Verfahren zur Herstellung einer Mutter oder Schraubenmutter, kann zudem vorgesehen sein, dass im Bereich des Hinterschnitts eine Unterlegscheibe angeordnet wird, wobei die Unterlegscheibe so verformt wird, dass nach der Verformung der Innendurchmesser geringfügig größer ist als der Außendurchmesser des Hinterschnitts und zudem der Innendurchmesser der Unterlegscheibe kleiner ist als der Außendurchmesser des aufgeweiteten Abschnitts des Schaftes. Dadurch wird ein Verfahren erreicht, bei dem in einfacher Art und Weise die Unterlegscheibe an der Mutter oder Schraubenmutter befestigt und damit verlustsicher oder verliersicher gesichert werden kann. Die Unterlegscheibe ihrerseits ermöglicht für die mit dem Verfahren hergestellte Mutter oder Schraubenmutter eine präzise Einstellung der Reibwerte zwischen Mutter und Befestigungselement.

Besonders vorteilhaft kann zudem vorgesehen sein, dass in dem nachgeordneten Verfahrensschritt eine maximale Aufweitung von 2% bis 9%, insbesondere von 5% bis 7% gegenüber dem Schaftdurchmesser, insbesondere gegenüber einem im nachgeordneten Verfahrensschritt unverformten Schaftdurchmesser erzeugt wird. Eine entsprechende Aufweitung von 2% bis 9%, insbesondere von 5% bis 7% hat sich als vorteilhaft herausgestellt, da dies einerseits erlaubt, im Bereich der Aufweitung ein Gewinde einzubringen, insbesondere einzuschneiden, und gleichzeitig noch ein entsprechend vollständiger, sauber ausgebildeter Hinterschnitt erreicht wird. Denn bei einer entsprechend zu starken Aufweitung bestünde die Gefahr, dass die entsprechend freistehende Flanke des Rohlings bezogen auf das Werkzeug, die im Rahmen des erfindungsgemäßen Verfahrens vorgesehen sein kann, nicht oder nicht mehr sauber ausgebildet und damit der Hinterschnitt nicht mehr oder nur noch unzureichend ausgebildet werden könnte. Gleichermaßen erlaubt eine Aufweitung von 3% bis 9%, insbesondere von 5% bis 7% eine ausreichende Toleranz zur Einbringung des Gewindes auf dem aufgeweiteten Abschnitt des Schaftes.

Hinsichtlich der Ausbildung eines Schraubelements in Form einer Mutter oder Schraubmutter kann eine geringe Aufweitung von 2% bis 4% vorteilhaft vorgesehen sein, da diese bereits ausreicht um den Sicherungszweck für eine Unterlegscheibe zu gewährleisten. Eine Einformung oder Ausbildung eines Außengewindes ist für die Erzeugung einer Mutter nicht erforderlich.

Eine weitere besonders bevorzugte Ausgestaltung des Verfahrens sieht zudem vor, dass das Sackloch derart ausgebildet wird, dass sich ein Boden, insbesondere des zweiten Abschnitts des Sacklochs, ausgehend von der Oberseite des Kopfes, bis zu 80%, bevorzugt bis zu 75%, besonders bevorzugt bis zu 70%, weiter bevorzugt bis zu 45% der Gesamthöhe des Schraubelements erstreckt. Die Gesamthöhe Schraubelements soll sich dabei zwischen einer Stirnseite oder einer Stirnfläche des Schaftes, insbesondere ohne Berücksichtigung etwaiger Fortsätze des Schaftes bis hin zu einer Oberseite des Kopfes erstrecken. Die Ausbildung des Sacklochs, insbesondere des zweiten Abschnittes des Sackloches bis zu einer Tiefe von bis zu 80 % der Gesamthöhe erlaubt einerseits besonders vorteilhaft eine, zumindest mittelbare Materialverdrängung in einen Abschnitt des Schaftes, der bis zur Stirnseite oder Stirnfläche des Schaftes reicht oder sich bis dorthin erstreckt. Dadurch wird sichergestellt, dass die Aufweitung bereits unmittelbar oder kurz hinter der Stirnseite oder Stirnfläche ihre maximale Ausdehnung annimmt und damit bereits in diesem Bereich ein Gewinde eingebracht werden kann. Damit steht in axialer Richtung ein ausreichender Abschnitt zum Vorsehen oder Einbringen des Gewindes der Dichtschraube zur Verfügung.

Hinsichtlich einer Schraubenmutter als Schraubelement kann eine Eindringtiefe des zweiten Abschnitts von 40% bis 45% bereits ausreichend sein, da die Aufweitung zur Sicherung der Unterlegscheibe weniger stark ausgebildet sein muss.

Gemäß einer weiteren, besonders bevorzugten Ausgestaltung des Verfahrens kann vorgesehen sein, dass der erste Abschnitt des Sacklochs so ausgebildet wird, dass sich ein Boden des ersten Abschnitts des Sacklochs, ausgehend von der Oberseite des Kopfes bis zu 70%, bevorzugt bis zu 65%, besonders bevorzugt bis zu 40% der Gesamthöhe des Schraubelements erstreckt. Bei der Definition der Gesamthöhe des Schraubelements soll abermals auf den Abstand zwischen einer, die Fortsätze nicht berücksichtigenden Stirnseite oder Stirnfläche des Schaftes einerseits und der Oberseite des Kopfes andererseits ausgegangen werden. Eine derartige Ausbildung des ersten Abschnittes des Sacklochs führt einerseits dazu, dass, soweit dieses vorgesehen ist, ein sicherer Halt eines Werkzeuges in dem ersten Abschnitt des Sackloches gewährleistet werden kann. Andererseits wird dadurch auch ermöglicht, dass Schraubelement mit verhältnismäßig wenig Material hergestellt werden kann. Dies wiederum kann vorteilhaft die Herstellungskosten Schraubelements sowie die Kosten zur Durchführung des Verfahrens vermindern.

Gemäß einer weiteren vorteilhaften Ausgestaltung des Verfahrens, welche sich insbesondere auf die Herstellung einer Mutter oder Schraubenmutter richtet, kann zudem vorgesehen sein, dass die Ausbildung des ersten Abschnitts des Sacklochs in zwei oder mehr Teilschritten ausgeführt wird, wobei bevorzugt in einem ersten Teilschritt 70 %, weiter bevorzugt 80 % der Gesamttiefe des Sacklochs, also des ersten Abschnitts des Sacklochs, hergestellt werden. Dadurch können die Kräfte und Spannungen, die im Material des Schraubelements oder des Schaubelementrohlings erzeugt werden sowie die Kräfte, die auf die entsprechenden Werkzeuge wirken, auf ein kontrollierbares und gut handhabbares Maß begrenzt werden.

Eine weitere besonders bevorzugte Ausgestaltung des Verfahrens, insbesondere zur Herstellung einer Dichtschraube, kann zudem vorsehen, dass im Rahmen des nachgeordneten Verfahrensschritts der zweite Abschnitt des Sacklochs derart ausgebildet wird, dass ein Boden des, insbesondere zweiten Abschnitts, des Sacklochs in axialer Richtung in einem Bereich maximaler radialer Aufweitung ausgebildet wird. Dies bedeutet mit anderen Worten ausgedrückt, dass vorteilhaft vorgesehen sein kann, dass der Boden des Sacklochs nach Durchführung des nachgeordneten Verfahrensschritts in axialer Richtung in einem Bereich des Schaftes ausgebildet ist, der zum Abschluss des nachgeordneten Verfahrensschritts an einem entsprechenden Werkzeug oder Werkzeugteil radial zur Anlage kommt. Dies bedeutet auch, dass mit dem Ausbilden des Sacklochs eine Art Umkehr der Fließrichtung des Materials während des Kaltfließpressens erreicht wird, zumindest bei einer mittelbaren Betrachtung der Materialverdrängung. Denn während die Ausbildung des Sacklochs in axialer Richtung vom Schraubenkopf her in Richtung des Schaftes oder der Stirnseite oder Stirnfläche ausgeführt wird und im Bereich der Stirnfläche oder Stirnseite mittelbar eine radiale Aufweitung des Schaftes bewirkt, so wird gleichzeitig zumindest mittelbar auch eine Materialverdrängung erreicht, bei der Material aus Richtung der Stirnseite oder Stirnfläche zurück in Richtung des Schraubenkopfes fließt, und dadurch eine Flanke oder geneigte Oberfläche des Schaftes ausbildet, die letztendlich, zumindest im Übergang zwischen Schaft und Kopf den gewünschten Hinterschnitt ausbildet.

Zudem kann in einer besonders bevorzugten Verfahrensführung, welche im Wesentlichen zur Herstellung eines Schraubelements in Form einer Mutter oder einer Schraubenmutter dient, vorgesehen sein, dass im Rahmen des nachgeordneten Verfahrensschritts der zweite Abschnitt des Sacklochs derart ausgebildet sind, dass ein Boden des Sacklochs in axialer Richtung im Kopf des Schraubelements oder des Schraubelementrohlings ausgebildet wird. Die verhältnismäßig geringe Eindringtiefe des Sacklochs, insbesondere des zweiten Abschnitts des Sacklochs, hat dabei für die Herstellung eines Schraubelements in Form einer Mutter oder einer Schraubenmutter verschiedene Gründe. Einerseits ist zur verliersicheren oder verlustsicheren Befestigung einer Unterlegscheibe im Bereich des Hinterstichs oder Hinterschnitts des Schraubelements nur eine vergleichsweise geringe Aufweitung des Schafts notwendig. Dies gilt insbesondere im Bezug auf die notwendige Aufweitung des Schaftes für eine Dichtschraube, bei der in dem Bereich der Aufweitung in der Regel noch ein Außengewinde eingebracht, insbesondere eingerollt oder eingewalzt, werden muss. Außerdem ist der Schaft eines Schraubelements in Form einer Mutter oder Schraubenmutter in der Regel deutlich kürzer ausgebildet, als der Schaft einer Dichtschraube oder eines vergleichbaren Schraubelements, so dass ein Ausbilden des zweiten Abschnitts des Sacklochs im Bereich des Kopfes ausreichend ist, um in dem verhältnismäßig kurzen Schaft eine durch zumindest mittelbare Materialverdrängung bewirkte radiale Aufweitung samt Ausbildung eines Hinterstichs oder Hinterschnitts zu erreichen.

Gemäß einer weiteren bevorzugten Ausgestaltung des Verfahrens, insbesondere zur Herstellung einer Dichtschraube, kann ebenfalls vorgesehen sein, dass der Schaft, insbesondere die Schaftoberfläche, durch Rollen mit einem Außengewinde versehen wird, wobei das Gewinde relativ zur Aufweitung und zum Hinterschnitt so ausgebildet wird, dass das Gewinde im Bereich des Hinterschnitts vollständig ausläuft. Dadurch wird erreicht, dass eine optimale Anlage zwischen einer Unterseite des Kopfes und einer Umgebung einer Einschrauböffnung bei einer eingeschraubten Schraube erreicht wird.

In einer weiteren vorteilhaften Verfahrensvariante kann zudem vorgesehen sein, dass, insbesondere im Hinblick auf die Erzeugung einer als Mutter oder Schraubenmutter ausgebildeten Vorrichtung im Rahmen eines Locherzeugungsschritts das Material des Schraubelementrohlings zwischen dem Boden des zweiten Abschnitts und einer vom Kopf abgewandten Stirnfläche des Schafts, insbesondere unter Beibehaltung des Hinterschnitts, ausgelocht oder ausgestanzt wird.

Bei der Locherzeugung oder dem Locherzeugungsschritt kann vorgesehen sein, dass ein Loch mit einem Durchmesser ausgelocht oder ausgestanzt wird, der dem Durchmesser des Sacklochs, insbesondere im ersten und zweiten Abschnitt, entspricht. Dies bedeutete im Umkehrschluss auch, dass vorgesehen sein kann, dass der erste Abschnitt des Sacklochs und der zweite Abschnitt des Sacklochs einen identischen Durchmesser aufweisen und insbesondere rund oder kreisrund ausgebildet sind. Auch die Locherzeugung oder der Locherzeugungsschritt kann so ausgestaltet sein, dass ein kreisrundes Loch zwischen dem Boden des zweiten Abschnitts des Sacklochs und der vom Kopf abgewandten Stirnfläche des Schafts ausgelocht oder ausgestanzt wird. Dadurch wird in besonders vorteilhafter Weise ermöglicht, eine Einschrauböffnung für das als Mutter oder Schraubenmutter ausgebildete Schraubelement bereitzustellen. Die Anpassung an den Durchmesser des Sacklochs hat dabei den Vorteil, dass verhältnismäßig wenig Material aus dem Rohling oder Schraubelementrohling ausgestanzt oder ausgelocht wird und damit ein geringer Materialausschuss entsteht.

Eine weitere vorteilhafte Ausgestaltung des Verfahrens, die sich bevorzugt auf die Herstellung eines Schraubelements oder Schraubelementrohlings in Form einer Mutter oder Schraubenmutter bezieht, kann zudem vorsehen, dass in dem im Locherzeugungsschritt erzeugten Loch, insbesondere mittels spanender Bearbeitung, ein Innengewinde erzeugt wird, welches sich bevorzugt vom Kopf bis zu einer vom Kopf abgewandten Stirnfläche des Schaftes erstreckt. Dadurch wird im Gegensatz zu einer Ausgestaltung des Schraubelements als Schraube, insbesondere Dichtschraube, die Außenoberfläche des Schaftes, insbesondere auch der aufgeweitete Bereich des Schafts, welcher mit zunehmendem Übergang zum Kopf den Hinterstich oder Hinterschnitt ausbildet, nicht weiter spanend bearbeitet. Dieser Bereich einer entsprechenden Schraubmutter oder Mutter kann in eine entsprechende Vertiefung eines Befestigungselements eingesetzt werden und dort beispielsweise zur Zentrierung der Schraubmutter sorgen. Gleichermaßen kann bei einer Ausbildung der Mutter oder Schraubenmutter mit einem Kopf sowie einem daran anschließenden Schaft über die Gesamthöhe der Mutter, die aus Schaft und Kopf gebildet wird, ein verhältnismäßig langes Innengewinde bereitgestellt und damit eine entsprechend gute Befestigungswirkung erzielt werden, obgleich, insbesondere bei Vorsehen einer Ausnehmung oder Vertiefung im Befestigungselement, zur Aufnahme des Schaftes, die Schraubenmutter im befestigten Zustand am Befestigungselement nur geringfügig über das Befestigungselement, nämlich mit der Höhe des Kopfes, übersteht. Somit wird gleichermaßen eine besonders hochwertige Verbindung oder Befestigung sowie eine platzsparende Befestigung ermöglicht. Durch die Ausbildung gemäß der vorliegenden Erfindung, bei der am Übergang zwischen Schaft und Kopf zudem verliersicher oder verlustsicher eine Unterlegscheibe angeordnet ist, kann zudem eine Verbindung oder Befestigung erzielt werden, bei der die Reibwerte besonders genau vorhergesehen oder bestimmt werden können. Die über das Befestigungselement überstehende Höhe der Mutter wird in diesem Fall von der Höhe der Unterlegscheibe geringfügig erhöht.

Eine weitere besonders bevorzugte Ausgestaltung des Verfahrens, welche ebenfalls bevorzugt auf die Ausbildung eines als Mutter oder Schraubenmutter ausgebildeten Schraubelements abzielt, kann zudem vorsehen, dass in einem weiteren Verfahrensschritt, bevorzugt nach der Ausbildung des ersten Abschnitts des Sacklochs im Kopf des Schraubelementrohlings, ein Außenwerkzeugangriff, insbesondere ein Außenvielzahn im Bereich des Kopfes ausgebildet wird, der sich bevorzugt, zumindest nach einem nachfolgenden Abgratvorgang, über die gesamte Höhe des Kopfes erstreckt.

Dadurch wird erreicht, dass trotz des, im Vergleich zur Gesamthöhe des Gewindes einer entsprechenden Mutter, vergleichsweise flachen Kopfes über ein entsprechendes Werkzeug ausreichendes Drehmoment oder ausreichende Kraft auf die Mutter oder Schraubenmutter übertragen werden kann, um eine Befestigung an einem Befestigungselement unter Einschraubung eines weiteren Schraubelements in die Einschrauböffnung zu ermöglichen. Die Ausbildung des Werkzeugangriffs, insbesondere aus Außenwerkzeugangriffs im Bereich des Kopfes des Schraubelementrohlings kann bevorzugt im Rahmen einer Kaltumformung, insbesondere im Rahmen eines Kaltfließpressens erzeugt werden, wobei zumindest Teile des Materials des Kopfes unter Ausbildung eines in Umfangsrichtung um den Kopf umlaufenden Grates verdrängt werden. Der so entstehende Grat kann im Rahmen eines weiteren Verfahrensschritts abgegratet werden. Beispielsweise kann das Abgraten im gleichen Verfahrensschritt wie die Ausbildung des zweiten Abschnitts des Sacklochs und damit zusammen mit der Ausbildung des Hinterstichs oder Hinterschnitts durchgeführt werden.

Bezüglich Schraubelementrohlings, insbesondere hergestellt nach einem Verfahren gemäß einer der vorangehend beschriebenen Verfahrensvarianten, wird die oben beschriebene Aufgabe mit einer Schraubelementrohling, der einen Kopf und einen an dem Schraubenkopf angeformten zylindrischen Schaft aufweist, wobei sich ausgehend vom Kopf ein Sackloch in Richtung des Schaftes erstreckt, welches zumindest einen ersten Abschnitt, insbesondere mit einem mehreckigen Querschnitt, bevorzugt zur Aufnahme eines Schraubwerkzeuges oder einen runden Querschnitt als Vorstufe einer Einschrauböffnung aufweist, und eine am Übergang zwischen dem Schraubenkopf und dem Schaft ein Hinterschnitt aufweist dadurch gelöst, dass das Sackloch einen zweiten, an den ersten Abschnitt angrenzenden Abschnitt aufweist, wobei der zweite Abschnitt bevorzugt einen zumindest abschnittsweise gleichbleibenden, insbesondere gegenüber dem ersten Querschnitt kleineren oder gleich großen Querschnitt aufweist, wobei der Hinterschnitt am Übergang zwischen Schaft und Kopf von einer, insbesondere durch zumindest mittelbare Materialverdrängung aus zumindest dem zweiten Abschnitt des Sacklochs, abschnittsweise gebildeten Aufweitung des Schaftes gebildet wird.

Damit werden in erfindungsgemäßer Weise Schraubelementrohlinge im Kaltfließpress-Verfahren erzeugt, die einerseits keinerlei oder kaum Beschränkungen hinsichtlich der Ausgestaltung der Stirnfläche oder Stirnseite des Schaftes der unterliegen und die zudem mit dem Hinterschnitt zwischen dem Schaft und dem Kopf eine besonders hohe Dichtwirkung oder eine vorteilhafte Sicherungswirkung zur Verlustsicherung einer Unterlegscheibe erzeugen. Umgekehrt bedeutet dies, dass gerade keine Vertiefung, Ausnehmung oder Ausbildung eines Sacklochs im Bereich der Stirnfläche oder Stirnseite des Schaftes mehr benötigt wird, um im Rahmen des Kaltfließpressens, und dadurch ohne zusätzliche spanende Bearbeitung, den Hinterschnitt zwischen Schraubenkopf und Schaft auszubilden.

Da auf die erfindungsgemäßen Schraubelementrohlinge im weitesten Sinne die gleichen Vorteile und vorteilhaften Wirkungen bezüglich der entsprechenden Verfahren und Verfahrensschritte realisiert werden, soll für die Beschreibung der erfindungsgemäßen Schraubelementrohlinge sowie der vorteilhaften Ausgestaltungen auf die entsprechenden Verfahrensmaßnahmen oder Verfahrensschritte ergänzend zu der nachfolgenden Beschreibung verwiesen werden.

Gemäß einer ersten vorteilhaften Ausgestaltung des Schraubelementrohlings kann vorgesehen sein, dass der Schaft zumindest in einem dem Schraubenkopf gegenüberliegenden Bereich eine Aufweitung aufweist. Die Aufweitung kann damit die Grundlage der Ausbildung des Hinterschnitts ohne spanende Bearbeitung des Schaftes und/oder Kopfes darstellen. Besonders vorteilhaft wird die Aufweitung gerade nicht durch eine Materialverdrängung oder Materialumformung im Bereich der Stirnfläche oder Stirnseite des Schaftes, sondern vielmehr durch die Materialverdrängung und/oder Materialumformung im Bereich des zweiten Abschnitts des Sachlochs erreicht oder ausgebildet.

Gemäß einer weiteren besonders vorteilhaften Ausgestaltung des Schraubelementrohlings kann vorgesehen sein, dass eine vom Schraubenkopf abgewandte ebene Stirnfläche des Schaftes oder eine mit einem sich axial von der Stirnfläche wegerstreckenden Fortsatz versehene Stirnfläche des Schaftes ausgebildet ist. Damit wird ein besonderes Bedürfnis der entsprechenden Anwender, insbesondere im Hinblick auf Dichtschrauben oder Dichtschraubenrohlingen, erreicht oder ermöglicht, die für ihre jeweiligen Anwendungen der Dichtschrauben eine ebene Stirnfläche oder eine Stirnfläche mit einem entsprechenden Fortsatz wünschen, wobei erfindungsgemäß dabei zur Ausbildung des Hinterschnitts zwischen Schaft und Kopf nicht zusätzlich ein spanender Bearbeitungsschritt vorgesehen werden muss und der Wunsch der Abnehmer entsprechend bei minimierten Herstellungskosten umgesetzt werden kann.

Weiter kann besonders bevorzugt vorgesehen sein, dass Schraubelementrohling an einer dem Schaft zugewandten Unterseite des Kopfes eine ringförmig ausgebildete Dichtfläche zur Anlage an einer Auflagefläche eines Aufnahmekörpers unter Ausbildung einer koaxialen Ringnut aufweist, welche radial nach außen von einer umlaufenden Ringwand begrenzt ist. Dadurch wird für eine als Dichtschraube ausgebildetes Schraubenelement die Dichtwirkung weiter verbessert.

Außerdem sieht eine bevorzugte Ausgestaltung des Schraubenelementrohlings vor, dass eine maximale Aufweitung des Schaftes, insbesondere eine maximale Aufweitung des Schaftes gegenüber eines nicht im Rahmen des nachgeordneten Verfahrensschritts aufgeweiteten Durchmessers 2% bis 9%, insbesondere 5% bis 7% beträgt. Dabei kann bevorzugt vorgesehen sein, dass der nicht aufgeweitete oder ursprüngliche Schaftdurchmesser am Übergang zwischen dem Schraubenkopf und dem Schaft gemessen oder bestimmt wird. Dadurch wird in vorteilhafter Weise erreicht, dass einerseits die Aufweitung groß genug ist, um den Hinterschnitt auszubilden, auch dann, wenn mit einer gewissen Toleranz im aufgeweiteten Bereich des Schaftes ein Gewinde eingebracht, insbesondere eingerollt oder eingewalzt wird. Bei einer verhältnisßmäßig geringen Aufweitung, beispielsweise im Bereich von 2% bis 3%, kann für eine Ausbildung einer Schraubenmutter vorteilhaft durch die Aufweitung und den resultierenden Hinterstich die Sicherungswirkung für eine Unterlegscheibe erreicht werden.

Eine weitere, besonders bevorzugte Ausgestaltung des Schraubelementrohlings kann vorsehen, dass sich ein Boden, insbesondere des zweiten Abschnitts, des Sacklochs, ausgehend von der Oberseite des Kopfes, bis zu 80%, bevorzugt bis zu 75%, besonders bevorzugt bis zu 70%, weiter bevorzugt bis zu 45% der Gesamthöhe der des Rohlings oder des fertigen Schraubelements erstreckt. Bezüglich der Definition der Gesamthöhe soll auf die obigen Ausführungen verwiesen werden. Eine solche Ausbildung des zweiten Abschnitts des Sachlochs, insbesondere des Bodens des zweiten Abschnitts des Sacklochs hat einerseits den Vorteil, dass der Schraubeelementrohling mit verhältnismäßig wenig Material hergestellt werden kann. Gleichzeitig erlaubt die Ausbildung des Bodens des zweiten Abschnitts des Sacklochs auch eine ausreichende Aufweitung des Schaftes an dem von dem Kopf gegenüberliegenden Ende sowie eine entsprechende Verjüngung des Schafts in Richtung des Übergangs zwischen Schaft und Kopf, insbesondere zur Ausbildung des Hinterschnitts.

Erfindungsgemäß ist vorgesehen, dass ein Boden des zweiten Abschnitts des Sacklochs in axialer Richtung in einem Bereich maximaler radialer Aufweitung verläuft oder angeordnet ist. Dadurch wird in besonders vorteilhafter Weise, zumindest durch mittelbare Materialverdrängung, nicht nur die radiale Aufweitung des Schaftes in dem entsprechenden Abschnitt bewirkt, sondern gleichzeitig auch eine Ausbildung einer gleichmäßigen Flanke als Übergang zwischen einem aufgeweiteten und einem nicht aufgeweiteten Bereich des Durchmessers des Schaftes bewirkt, sodass einerseits die Möglichkeit gegeben ist, dass in diesem Bereich ein eingebrachtes oder eingewalztes oder eingerolltes Gewinde ausläuft, andererseits ein Übergang zwischen dem Gewindebereich und des Hinterschnittsbereichs oder dem Hinterschnitt geschaffen wird.

Gemäß einer weiteren, besonders bevorzugten Ausgestaltung des Schraubelementrohlings kann vorgesehen sein, dass das Sackloch einen dritten, an den zweiten Abschnitt angrenzenden Abschnitt aufweist, der konzentrisch zum ersten und/oder zweiten Abschnitt des Sacklochs ausgebildet ist und bevorzugt ein Kegelsegment ausbildet, welches sich in Richtung des Schaftes verjüngt und insbesondere in einen ebenen, parallel zur Oberseite verlaufenden Boden des Sacklochs mündet. Der dritte Abschnitt des Sacklochs kann bevorzugt zusammen mit dem zweiten Abschnitt des Sacklochs in dem nachgeordneten Verfahrensschritt ausgebildet werden. Der dritte Abschnitt des Sacklochs führt einerseits zur Optimierung oder Minimierung des Materialbedarfs. Andererseits ermöglicht der dritte Abschnitt des Sacklochs eine besonders genaue und gleichmäßige Ausbildung eines Übergangs zwischen einem aufgeweiteten Abschnitt des Schaftes und einem nicht aufgeweiteten oder einen einen Hinterschnitt ausbildenden Abschnitt des Schaftes.

Im Hinblick auf das erfindungsgemäße Schraubelement, insbesondere eine erfindungsgemäße Dichtschraube, wird die oben genannte Aufgabe dadurch gelöst, dass das Schraubelement, insbesondere die Dichtschraube aus einem Schraubelementrohling der vorangehend beschriebenen Art hergestellt wird. Dies bedeutet, dass im Wesentlichen der im Schraubelementrohling vorgesehene Hinterstich oder Hinterschnitt im Übergangsbereich zwischen dem Schaft und dem Kopf, welcher jedoch ohne oder zumindest ohne merkliche Verformung der vom Kopf abgewandten Stirnseite des Schaftes erzeugt wurde, beibehalten wird und ansonsten mit im Wesentlichen bekannten Weiterverarbeitungsschritten sichergestellt wird, dass der Schraubenrohling oder der Schraubelementrohling zu einer Schraube, insbesondere zu einer Dichtschraube weiterverarbeitet wird.

Erfindungsgemäß ist vorgesehen, dass der Schaft des Schraubelements, insbesondere die Schaftoberfläche, ein Gewinde, insbesondere ein Außengewinde, aufweist, wobei das Gewinde relativ zur Aufweitung und zum Hinterschnitt des Schaftes so ausgebildet wird, dass das Gewinde im Bereich des Hinterschnitts vollständig ausläuft. Dadurch wird eine besonders gute Dichtwirkung der Dichtschraube ermöglicht, da der Kopf besonders einfach und besonders genau an einer entsprechenden Öffnung oder Ausnehmung, die durch die Dichtschraube verschlossen wird, anliegen kann.

Im Hinblick auf ein Schraubelement, insbesondere eine Mutter oder Schraubenmutter, kann vorteilhaft vorgesehen sein, dass das Schraubelement, insbesondere die Mutter oder Schraubenmutter aus einem oben beschriebenen Schraubelementrohling hergestellt wird. Dies bedeutet, dass auch im Hinblick auf die Mutter oder Schraubenmutter in zwischen dem Schaft und dem Kopf oder in einem an dem Kopf angrenzenden Bereich des Schaftes ein Hinterstich oder Hinterschnitt ausgebildet ist, ohne dass zu dessen Ausbildung eine wesentliche Verformung des vom Kopf abgewandten Ende des Schaftes oder der vom Kopf abgewandten Stirnseite des Schaftes notwendig ist.

Vorteilhaft kann vorgesehen sein, dass eine Einschrauböffnung umfasst ist, welche durch eine das Sackloch des Schraubelementrohlings zu einer axiale durchgehenden Öffnung erweiterenden Ausnehmung im Schaft gebildet ist. Dabei wird bei den Schraubelementen, insbesondere den Muttern oder Schraubenmuttern die Einschrauböffnung nach der Ausbildung des Hinterstichs oder Hinterschnitts ausgebildet, insbesondere ausgestanzt oder ausgelocht. Ganz besonders bevorzugt wird das Einschraubloch oder die Einschrauböffnung, wie auch das Sackloch, von Seiten des Kopfes her ausgelocht. Dies bedeutet, dass die Einschrauböffnung in Richtung des vom Kopf abgewandten Endes des Schaftes hin ausgelocht wird. Dadurch kann sichergestellt werden, dass das Auslochen oder Ausstanzen ohne wesentlichen Einfluss auf den Schaft und damit auch ohne Einfluss auf den Hinterstich oder Hinterschnitt im Bereich des Schaftes ausgeführt wird.

Eine weitere besonders vorteilhafte Ausgestaltung des Schraubelements, insbesondere der Mutter, kann zudem vorsehen, dass die Einschrauböffnung ein Innengewinde aufweist, welches sich bevorzugt über die gesamte Einschrauböffnung erstreckt.

Weiter kann für das Schraubelement, insbesondere die Mutter vorteilhaft vorgesehen sein, dass diese ein Unterlegscheibe aufweist, welche im Bereich des Schaftes verlustsicher oder verliersicher angeordnet ist, wozu der Innendurchmesser der Unterlegscheibe zumindest abschnittsweise kleiner ausgebildet ist, als der Außendurchmesser des aufgeweiteten Bereichs des Schafts und bevorzugt geringfügig größer ist, als der Außendurchmesser des Hinterschnitts oder des Bereichs des Schaftes, in dem der Hinterschnitt ausgebildet ist. Dadurch wird sichergestellt, dass beim Montieren oder Befestigen der Mutter die Unterlegscheibe nicht separat gehandhabt werden muss. Gleichzeitig wird sichergestellt, dass über die Unterlegscheibe die Reibwerte der Verbindung oder Befestigung, die mittels der Mutter hergestellt wird, genau vorhersehbar oder genau bestimmbar sind.

Über die bevorzugte Ausgestaltung eines geringfügig größer ausfallenden Innendurchmessers der Unterlegschreibe bezogen auf den Außendurchmesser des Hinterschnitts oder Hinterstichs, kann zudem erreicht werden, dass die Unterlegscheibe zwar verliersicher oder verlustsicher an der Mutter angeordnet oder befestigt ist, gleichzeitig aber eine leichte Rotation und/oder Verkippung der Unterlegscheibe gegenüber dem Schaft oder gegenüber der Mutter ausgeführt werden kann, was wiederum die Montage der Mutter erleichtert.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1a, 1b:: einen ersten dem erfindungsgemäßen Verfahren vorgelagerten Verfahrensschritt zur Herstellung eines Schraubelementrohlings sowie einen aus dem Verfahrensschritt hervorgehenden Rohling;
- Fig. 2a, 2b:: einen ersten Verfahrensschritt zur Herstellung eines erfindungsgemäßen Schraubelement oder eines erfindungsgemäßen Schraubelementrohlings sowie einen entsprechenden Schraubelementrohling;
- Fig. 3a - 3c:: einen nachgeordneten Verfahrensschritt zur Herstellung eines erfindungsgemäßen Schraubelement oder eines erfindungsgemäßen Schraubelementrohlings sowie einen entsprechenden Schraubelementrohling.
- Fig. 4:: einen Stadiengang zur Herstellung eines erfindungsgemäßen Schraubelementrohlings und umfassend das erfindungsgemäße Verfahren in einer perspektivischen Ansicht und in einer perspektivischen Schnittansicht;
- Fig. 5:: einen Stadiengang zur Herstellung eines erfindungsgemäßen Schraubelementrohlings und umfassend das erfindungsgemäße Verfahren in einer seitlichen Schnittdarstellung sowie teilweise in einer Draufsicht auf die jeweiligen Stadien der Rohlinge;
- Fig. 6:: schematische Darstellung einer Unterlegscheibe zur Verwendung mit einem erfindungsgemäßen Schraubelement oder Schraubelementroohling.

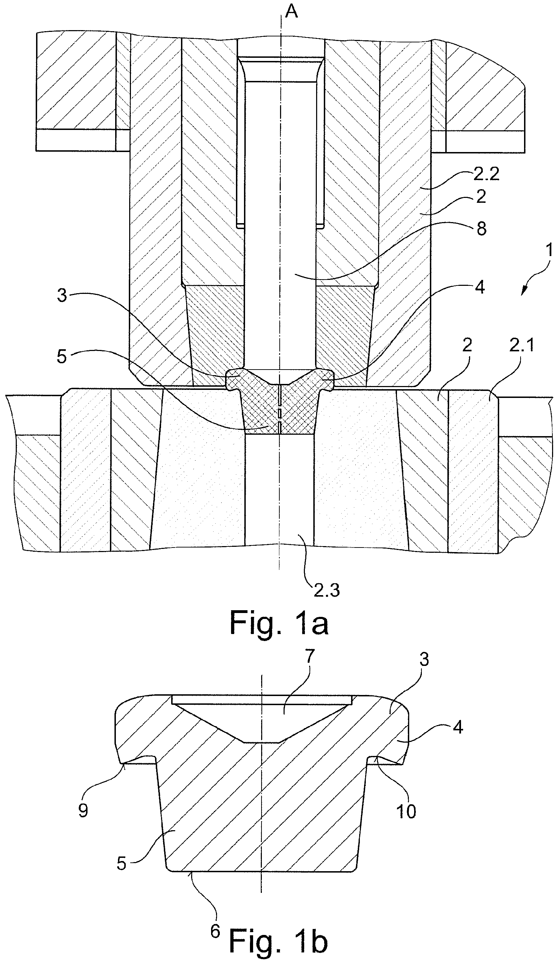

In den Fig. 1 bis 3 wird ein Ausführungsbeispiel der Erfindung beschrieben, welches sich auf eine als Dichtschraube ausgestaltetes Schraubelement und die entsprechende Herstellung bezieht. Einzelne Merkmale, Verfahrensschritte oder Eigenschaften können jedoch auch bei der nachfolgenden Beschreibung eines Schraubelements oder Rohlings für eine Schraubenmutter verwendet werden.

Die Fig. 1a zeigt ein zweiteiliges Werkzeug 1 sowie eine in dem Werkzeug 1, insbesondere zwischen den beiden Werkzeugteilen 2 befindlicher Rohling 3 einer Dichtschraube. Die Fig. 1b zeigt den Rohling 3 einer Dichtschraube, wie er durch den Verfahrensschritt erhalten wird, der im Rahmen der Bearbeitung mit dem Werkzeug 1 des Verfahrensschritts der Fig. 1a erzeugt wird. Die Bearbeitung gemäß der Fig. 1a und die Form des Rohlings 3 gemäß der Fig. 1b ist dem erfindungsgemäßen Verfahren vorgelagert oder kann dem erfindungsgemäßen Verfahren vorgelagert sein. Insbesondere veranschaulicht jedoch die Form des Rohlings 3 sowie die Ausgestaltung der Werkzeugteile 2 des Werkzeugs 1 die bisherigen Limitierungen oder Grenzen des Kaltfließpressens. Denn die zwei Werkzeugteile 2 bilden einerseits ein Aufnahmewerkzeugteil 2.1 sowie ein Verformungswerkzeugteil 2.2 aus, wobei das Aufnahmewerkzeugteil 2.1 in axialer Richtung A eine Verengung oder Verjüngung vom Schraubenkopf 4 weg aufweist. Dadurch wird sichergestellt, dass der Schaft 5, der an den Kopf 4 angrenzt, nach der Durchführung des Bearbeitungsschrittes oder des Verfahrensschrittes, wie er in der Fig. 1a dargestellt ist, aus dem Aufnahmewerkzeugteil 2.1 insbesondere durch eine Schiebe- oder Stoßbewegung mit einem Stößel 2.3 in axialer Richtung A entnommen oder ausgeführt werden kann.

Dementsprechend ist im Verfahrensschritt oder im Herstellungsstadium der Dichtschraube oder des Dichtschraubenrohlings 3, wie er in der Fig. 1a dargestellt ist, unschädlich, dass nach Applikation des Verformungswerkzeugteils 2.2 der Schaft 5 des Rohlings 3 vollständig an den radialen Wänden des Aufnahmewerkzeugteils 2.1 anliegt. Wie jedoch aus der Fig. 1a bereits deutlich wird, wäre eine in axialer Richtung A gegenüber der Längsachse anders oder negativ ausgerichtete Flanke oder Verjüngung des Schaftes 5, nämlich eine Verjüngung in Richtung des Schraubenkopfes 4, zumindest bei einem einteiligen Aufnahmewerkzeugteil 2.1 nicht möglich, da dann ein Ausführen oder Auswerfen über den Stößel 2.3 daran scheitern würde, dass die Stirnseite oder Stirnfläche 6 des Rohlings 3 gegenüber dem Übergang zwischen dem Schaft 5 und dem Kopf 4 des Rohlings 3 ein größerer Durchmesser aufweisen würde und damit ein Ausstoßen in axialer Richtung A zumindest nicht ohne eine Aufhebung der Verjüngung, möglich wäre.

Der entsprechende Rohling 3, wie er in der Fig. 1b dargestellt ist, umfasst somit neben dem Kopf 4 und einem an dem Kopf 4 angrenzenden Schaft 5, welcher im Beispiel der Fig. 1b noch vom Übergang zwischen Kopf 4 und Schaft 5 hin zur Stirnseite oder Stirnfläche 6 des Schaftes 5 in axialer Richtung verjüngt ausgebildet ist, ein Sackloch 7 oder eine Vorform eines Sacklochs 7. Die Verformung des Sacklochs 7 wird durch einen vom Verformungswerkzeugteil 2.2 umfassten Stempel 8 in dem Rohling 3 erzeugt oder in den Rohling 3 eingeprägt, wobei die Vorform des Sacklochs 7 unter Materialverdrängung dazu führt, dass der Schaft 5 umfänglich oder radial an das Werkzeug 1, insbesondere das Aufnahmewerkzeugteil 2.2 angepresst und entsprechend angeformt wird.

Außerdem sind in dem Rohling 3 der Fig. 1b bereits die Anlagen im Bereich des Kopfes oder Schraubenkopfes 4 vorhanden, um an einer dem Schaft 5 zugewandten Unterseite 9 des Kopfes oder Schraubenkopfes 4 eine ringförmige Dichtfläche 10 zur Anlage an einer Auflagefläche eines Aufnahmekörpers der Dichtschraube unter Ausbildung einer koaxialen Ringnut auszubilden.

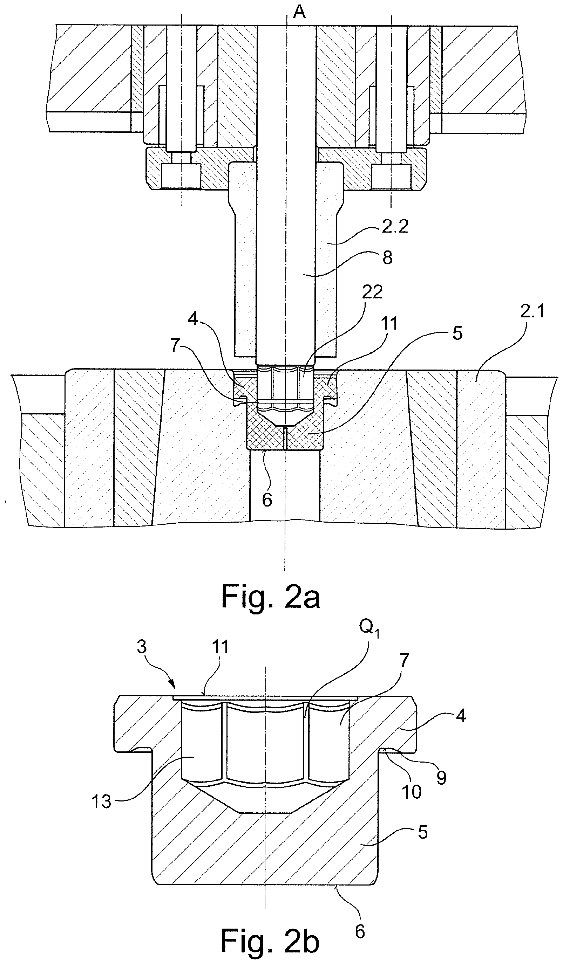

Im Anschluss an die Bearbeitungsstation oder den Verfahrensschritt, wie er in der Darstellung der Fig. 1a gezeigt ist, kann beispielsweise nach einem Ausstoßen des Rohlings 3 über den Stößel 2.3 eine Bearbeitungsstation und/oder ein Verfahrensschritt erreicht und durchgeführt werden, wie er in der Fig. 2a gezeigt ist. Darin wird ebenfalls mit einem entsprechend zweiteilig ausgebildeten Werkzeug 1 in an sich bekannter Weise von einer von dem Schaft 5 abgewandten Oberseite 11 des Kopfes oder Schraubenkopfes 4 ein Sackloch 7 ausgebildet, welches sich in Richtung des Schafts 5 erstreckt und welcher zumindest den ersten, in der Bearbeitungsstation bzw. in dem Verfahrensschritt der Fig. 2a dargestellten ersten Abschnitt aufweist, der bevorzugt einen mehreckigen Querschnitt, bevorzugt zur Aufnahme eines Schraubwerkzeuges zur Verschraubung der Dichtschraube aufweist. Das Verformungswerkzeugteil 2.2 umfasst dazu ebenfalls oder abermals ein Stempel 8, der vonseiten der Oberseite 11 des Kopfes oder Schraubenkopfes 4 in den Schraubenkopf 4 und den darunterliegenden Schaft 5 eingeprägt wird, wodurch der Querschnitt des Endabschnittes 12 des Stempels 8 als erster Querschnitt oder als Querschnitt eines ersten Abschnitts 13 des Sacklochs 7 erzeugt wird. Zudem ist das, abgesehen von dem Stößel 2.3 ansonsten einteilig ausgebildete Aufnahmewerkzeugteil 2.1 mit parallel zur axialen Richtung A verlaufenden Oberflächen ausgestaltet, sodass der Schaft 5 des Rohlings 3 durch Erzeugen des ersten Abschnitts 13 des Sacklochs 7 ausgehend von der verjüngten Form, wie sie in der Fig. 1b dargestellt ist, zu einer zylindrischen, insbesondere kreiszylindrischen Form umgeformt wird.

In der Fig. 2b ist der entsprechende Rohling 3 nochmals vergrößert dargestellt. Erkennbar ist, dass einerseits ein erster Abschnitt 13 eines Sacklochs 7 ausgebildet ist, welches sich von der Oberseite 11 des Schraubenkopfes 4 in Richtung des Schaftes 5 erstreckt. Außerdem ist in der Fig. 1b der, bevorzugt zur Aufnahme eines Schraubwerkzeugs ausgebildete mehreckige Querschnitt Q1 des ersten Abschnitts 13 des Sacklochs 7 erkennbar. Außerdem ist in der Darstellung des Rohlings 3 gemäß der Fig. 2b erkennbar, dass der Schaft 5 eine im Wesentlichen zylindrische Außenkontur angenommen hat, was durch eine zumindest mittelbare Materialverdrängung aus dem Bereich des ersten Abschnitts 13 des Sachlochs 7 und einer entsprechenden Ausbildung des Aufnahmewerkzeugteils 2.1 gewährleistet wird. Durch die zylindrische Form oder Außenkontur des Schaftes 5 des Schraubenrohlings 3 kann dieser beispielsweise in einem Anschluss an die Bearbeitung oder den Bearbeitungsschritt der Darstellung der Fig. 2a abermals durch einen dem Aufnahmewerkzeugteil 2.1 zuzuordnenden Stößel 2.3 ausgeworfen werden, insbesondere ohne dass die sonstigen Teile des Aufnahmewerkzeugteils 2.1 verändert, insbesondere in mehrere Teile oder Untergruppen zerlegt werden müssen.

Die im Rohling 3 der Fig. 1 b bereits angelegte oder vorgeformte Dichtfläche 10 auf der Unterseite 9 des Kopfes oder Schraubenkopfes 4 wird auch durch die Verarbeitungsstation der Fig. 2a gehalten bzw. weiter ausdefiniert.

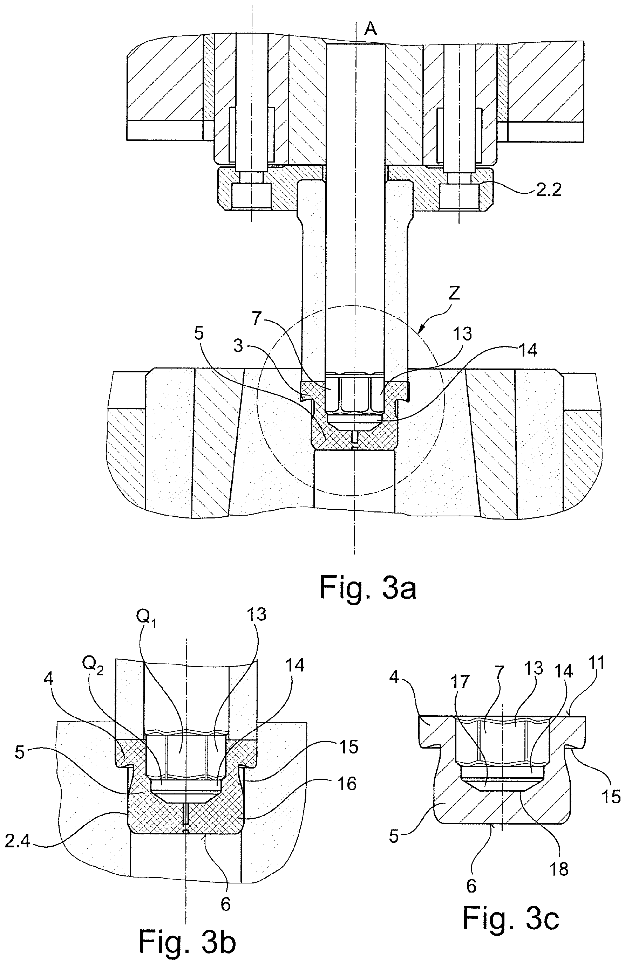

Die Fig. 3a und 3b zeigen eine Bearbeitungssituation oder eine Bearbeitungsstation des erfindungsgemäßen Verfahrens, in dem der erfindungsgemäße nachgeordnete Verfahrensschritt durchgeführt wird. Dementsprechend zeigt die Fig. 3c ein Rohling 3 einer Dichtschraube bzw. eine Dichtschraube, die das Ergebnis des erfindungsgemäßen Verfahrens bzw. einen erfindungsgemäßen Rohling 3 oder eine erfindungsgemäße Dichtschraube darstellt. Im Verfahrensschritt der Fig. 3a wird abermals mit einem Verformungswerkzeugteils 2.2 das im Schraubenrohling 3 bereits ausgebildete Sackloch 7 um einen zweiten Abschnitt 14, welcher sich an den ersten Abschnitt 13 anschließt, vertieft, was ebenfalls durch einen entsprechend geformten Stempel 8 des Verformungswerkzeugteils 2.2 erreicht wird. Der zweite Abschnitt 14 des Sacklochs 7 weist einen zweiten Querschnitt Q2 auf, welcher gegenüber dem ersten Querschnitt Q1 bzw. dem Querschnitt Q1 des ersten Abschnitts 13 des Sacklochs 7 kleiner ausgebildet ist.

Zumindest durch die mittelbare Materialverdrängung aus zumindest dem zweiten Abschnitt 14 des Sacklochs 7 wird darüber hinaus im Schaft 5 der Dichtschraube oder des Rohlings 3 der Dichtschraube ein Hinterschnitt 15 ausgebildet, welcher am Übergang zwischen dem Schaft 5 und dem Kopf 4 des Rohlings 3 angeordnet ist. Durch den Hinterschnitt 15 wird insbesondere ohne spanende Bearbeitung eine verbesserte Dichtwirkung der Dichtschraube erreicht. In der Darstellung der Fig. 3a ist dabei bereits angedeutet, und in der vergrößerten Abbildung des Ausschnitts Z der Fig. 3a in der Fig. 3b nochmals deutlich wiedergegeben, dass im Rahmen der Ausbildung oder Erzeugung des zweiten Abschnitts 14 des Sacklochs 7 der Schaft 5 zumindest in einem dem Schraubenkopf gegenüberliegenden Bereich 16 zumindest unter mittelbarer Materialverdrängung aus dem zweiten Abschnitt 14 des Sacklochs 7 aufgeweitet wird. Außerdem ist insbesondere in der Fig. 3b zu erkennen, dass nach Abschluss des nachgeordneten Verfahrensschritts, der in der Fig. 3a und 3b wiedergegeben wird, ein Teil des aufgeweiteten Abschnitts des Schaftes 5 an dem radialen Verformungswerkzeugteil 2.4 des Aufnahmewerkzeugteils 2.2, nämlich insbesondere in dem aufgeweiteten Bereich 16 anliegt, wohingegen der den Hinterschnitt 15 ausbildende Teil des Schaftes 5 gegenüber dem radialen Verformungswerkzeugteil 2.4 in axialer Richtung A in Richtung des Kopfes oder Schraubenkopfes 4 einen zunehmenden Abstand aufweist. Dieser zwischen dem Rohling 3 und dem radialen Verformungswerkzeugteil 2.4 ausgebildete und in Richtung des Kopfes oder Schraubenkopfes 4 zunehmende Abstand, der in besonders deutlicher Weise in der Fig. 3b zu erkennen ist, bildet die erfindungsgemäße Abkehr von den bisherigen Kaltfließpress-Verfahren, in denen notwendigerweise von einer entsprechenden vollständigen Anlage mit einem radialen Verformungswerkzeugteil 2.4 ausgegangen wurde.

Dadurch wird einerseits ermöglicht, dass eine Aufweitung in den Bereich 16 ermöglicht und dadurch bedingt der Hinterschnitt 15 erzeugt werden kann, gleichzeitig jedoch die Stirnseite oder Stirnfläche 6 eine ebene oder sonst weitestgehend beliebige, insbesondere eine vom Kopf oder Schraubenkopf 4 wegragenden Fortsatz aufweisen kann und trotzdem der Rohling 3, insbesondere nach dem Einformen oder Einpressen des zweiten Abschnitts 14 des Sacklochs 7 von einem Stößel 2.3 aus dem Aufnahmewerkzeugteil 2.2 insbesondere aus dem radialen Verformungswerkzeugteil 2.4 entnommen, insbesondere ausgestoßen werden kann, ohne dass dabei der Hinterschnitt 15 oder der aufgeweitete Bereich 16 beeinträchtigt, noch das Aufnahmewerkzeugteil 2.2, insbesondere das radiale Verformungswerkzeugteil 2.4 in radialer Richtung A geöffnet oder geteilt werden muss.

Dementsprechend wird dem nachgeordneten Verfahrensschritt, wie er beispielhaft in der Fig. 3a und 3b dargestellt ist, eine Dichtschraube oder ein Dichtschraubenrohling 3 erzeugt, der eine ebene Stirnfläche oder Stirnseite 6 aufweist, der zudem eine den Hinterschnitt 15 bedingende Aufweitung des Schaftes 5 aufweist und bei dem insbesondere zur Ausbildung des Hinterschnitts 15 keine spanende Beareitung des Rohlings 3 benötigt wird und der Rohling 3 insgesamt mit Kaltfließpress-Verfahren hergestellt werden kann. Im Beispiel der Fig. 3c umfasst das Sackloch 7 noch einen vorteilhaften dritten Abschnitt 17, welcher sich an den zweiten Abschnitt 14 anschließt oder an den zweiten Abschnitt 14 angrenzt, der konzentrisch zum ersten und/oder zweiten Abschnitt 14 des Sacklochs 7 ausgebildet ist und ein Kegelsegment ausbildet, welches sich in Richtung A des Schaftes 5 verjüngt und insbesondere in einem ebenen, parallel zur Oberseite 11 des Kopfes oder Schraubenkopfes 4 verlaufenden Boden 18 des Sacklochs 7 mündet.

Bevorzugt kann die Aufweitung des Schaftes 5, insbesondere im Bereich 16 der maximalen Aufweitung 3% bis 9%, bevorzugt 5% bis 7% des nicht aufgeweiteten Durchmessers des Schaftes 5 betragen, um besonders vorteilhaft ein entsprechendes Gewinde in den Schaft 5 einzubringen, insbesondere einzuschneiden und damit den Rohling 3 weitestgehend zu einer Dichtschraube fertigzustellen. Der nicht aufgeweitete Durchmesser des Schaftes 5 oder Schaftdurchmesser kann beispielsweise anhand des Schaftdurchmessers der Fig. 2b oder anhand des Schaftdurchmessers der Fig. 3c am Übergang zwischen dem Schaft 5 und dem Kopf oder Schraubenkopf 4 bestimmt werden. Wie in der Darstellung der Fig. 3c erkenntlich, erstreckt sich der Boden 18 des Sacklochs 7 bis etwa 75% der Gesamthöhe der Schraube oder des Schraubenrohlings 3, wobei diese zwischen der Stirnfläche oder Stirnseite 6 einerseits und der Oberseite 11 des Kopfes oder Schraubenkopfs 4 andererseits bestimmt wird. Außerdem ist der Boden 18 des Sacklochs 7 derart ausgebildet oder angeordnet, dass der Boden 18 in axialer Richtung A in einem Bereich 16 maximaler radialer Aufweitung ausgebildet wird oder ausgebildet ist. Dadurch wird in vorteilhafter Weise die Ausbildung der Flanke oder Verjüngung bewirkt, die ihrerseits die Ausbildung des Sacklochs 5 bewirkt oder zumindest mit veranlasst.

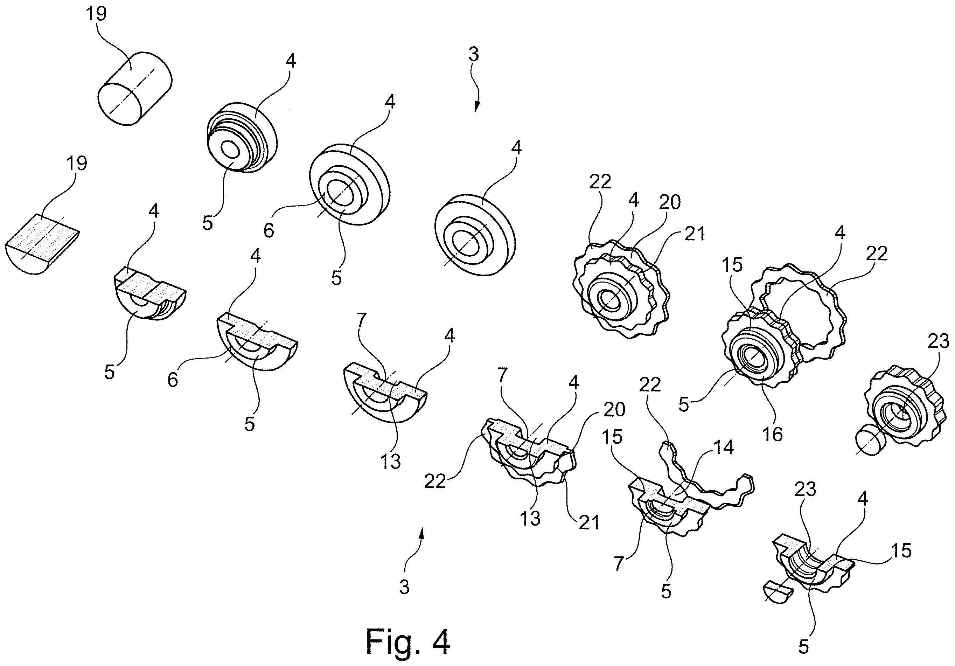

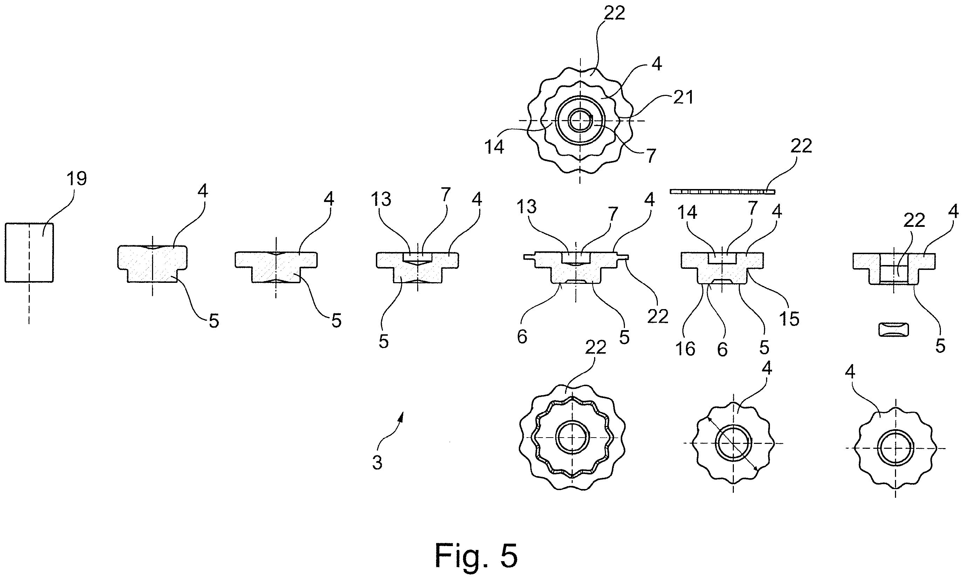

In den Figuren 4 und 5 wird ein Ausführungsbeispiel der Erfindung beschrieben, welches sich auf eine als Schraubmutter oder Mutter ausgestaltetes Schraubelement und die entsprechende Herstellung oder das entsprechende Herstellungsverfahren bezieht. Einzelne Merkmale, Verfahrensschritte oder Eigenschaften können jedoch auch bei der vorangehend beschriebenen Herstellung eines Schraubelements oder eines Schraubelementrohlings für eine Dichtschraube verwendet werden. In den Figuren 4 und 5 sind jeweils die unterschiedlichen Stadien des Schraubelementrohlings in unterschiedlichen Ansichten dargestellt. Bezüglich der Werkzeuge, die bei der Umformung zum Einsatz kommen, wird vom Prinzip her auf die Darstellungen der Figuren 1 bis 3 verwiesen. Dies bedeutet, dass die Umformung des Rohlings gemäß der Figuren 4 und 5, zumindest soweit dargestellt, mit Verfahrensschritten des Kaltverformens, insbesondere des Kaltfließpressens, bearbeitet werden.

In der Darstellung der Figur 4 sind die Stadien des Schraubelementrohlings zur Herstellung eines Rohlings einer Mutter oder Schraubenmutter in der Folge der Bearbeitungs- oder Verformungsschritte von links nach rechts dargestellt, wobei jeweils zu einem Verfahrensschritt oder Stadium eine perspektivische Ansicht und ein perspektivische Schnittansicht gezeigt ist.

In den ersten drei Stadien wird ein zylindrischer Grundkörper 19 so umgeformt, dass er einen Kopf 4 und einen an den Kopf 4 angrenzenden Schaft 5 aufweist. Dabei ist zu erkennen, dass der Schaft 5 an seiner von dem Kopf abgewandten Stirnseite 6 kein ebene oder glatte Oberfläche aufweist, sondern eine geringfügige Konturierung aufweist, die im Wesentlichen der Zentrierung des Rohlings im Rahmen der jeweils nachfolgenden Bearbeitungs- oder Verformungsschritte dient.

Im vierten dargestellten Stadium oder Verfahrensschritt wird im Bereich des Kopfes 4 des Rohlings ein Sackloch 7 oder vielmehr ein erster Abschnitt 13 eines Sacklochs 7 erzeugt.

Im nachfolgenden Verfahrensschritt wird einerseits der erste Abschnitt 13 des Sacklochs 7 im Bereich des Kopfes 4 weiter ausgebildet oder vertieft und gleichzeitig wird auf dem Außenumfang 20 des Schaftes 4 ein Außenwerkzeugangriff 21 ausgebildet, wobei bei der Ausbildung des Außenwerkzeugangriffs 21 ein Grat 22 im Bereich des Kopfes 4 des Schraubelementrohlings erzeugt wird. In dem nachfolgenden Verfahrensschritt oder Stadium des Schraubelementrohlings 3 wird einerseits der Grat 22 abgegratet und gleichzeitig ein zweiter Abschnitt 14 des Sacklochs 7 in einer solchen Art und Weise ausgebildet, dass im Bereich des Schafts 5 ein vom Kopf 4 abgewandter oder gegenüberliegender Bereich 16 entsteht, der zumindest durch mittelbare Materialsverdrängung aus dem zweiten Abschnitt 14 des Sacklochs 7 radial aufgeweitet wird, so dass gleichzeitig in einem an dem Kopf 4 angrenzenden Bereich des Schaftes 5 ein Hinterschnitt 15 ausgebildet wird. Bei der Betrachtung der vom Kopf abgewandten Stirnseite 6 des Schafts 5 kann festgestellt werden, dass diese eine minimale Veränderung des Profils durchläuft. Diese Veränderung des Profils ist jedoch nicht ausreichend, um den Hinterstich oder Hinterschnitt 15 auszubilden. Auch ist die Veränderung des Profils der Stirnseite 6 des Schafts 5 nicht maßgeblich an der zumindest mittelbaren Materialverdrängung beteiligt, die zur Ausbildung des Hinterschnitts 15 führt. Unter das erfindungsgemäße Verfahren sollen dementsprechend auch solche Verfahren fallen, bei denen seine vom Kopf abgewandte Stirnseite 6 des Schaftes nicht vollständig unverändert bleibt, sondern vielmehr geringen oder geringsten Veränderungen unterworfen ist, welche gleichzeitig jedoch keinen oder keinen merklichen Einfluss auf die Ausbildung des Hinterschnitts ausüben. Umgekehrt ausgedrückt bedeutet dies, dass gemäß des erfindungsgemäßen Verfahrens der Hinterschnitt fast ausschließlich durch die mittelbare Materialverdrängung im Rahmen der Herstellung oder Ausbildung des zweiten Abschnitts des Sacklochs 7, aus Richtung des Kopfes 4 des Schraubelementrohlings 3 erzeugt wird.

In einem letzten Stadium oder Verfahrenszustand des erfindungsgemäßen Verfahrens zur Herstellung eines Schraubelementrohlings zeigt die Figur 4 einen Locherzeugungsschritt, in dem aus dem Sackloch 7 durch Ausstanzen oder Auslochen eine Einschrauböffnung 23 ausgebildet wird, die so erzeugt wird, dass der Hinterschnitt 15 im Übergangsbereich zwischen Schaft 5 und Kopf 4 weitestgehend unbeeinträchtigt bleibt. Dazu wird beispielsweise die Auslochung oder Ausstanzung von Seiten des Kopfes 4 in Richtung des Schafts 5 durchgeführt. Um aus dem Schraubelementrohling 3 gemäß des letzten Stadiums oder Verfahrensschritts der Figur 4 ein erfindungsgemäße Mutter oder Schraubenmutter herzustellen, kann zudem vorgesehen sein, dass im Bereich der Einschrauböffnung 23 ein Innengewinde ausgebildet, insbesondere eingeschnitten, wird. Ebenfalls kann vorgesehen sein, dass im Bereich des Hinterschnitts 15 eine Unterlegscheibe verliersicher oder verlustsicher angeordnet wird.

Die Figur 5 zeigt den Stadiengang der Figur 4 in seitlichen Schnittdarstellungen sowie zumindest teilweise in Draufsichten auf den Schraubelementrohling 3. In den seitlichen Schnittdarstellungen wird insbesondere deutlich, dass die Aufweitung des unteren oder vom Kopf 4 abgewandten Bereichs 16 des Schaftes 5 verhältnismäßig gering ausfällt und dementsprechend auch die Ausbildung des Hinterschnitts 15 verhältnismäßig gering ausfällt. Dies ist dem Umstand geschuldet, dass der Hinterschnitt 15 lediglich zur verliersicheren oder verlustsicheren Befestigung oder Anordnung einer Unterlegscheibe dient.

In den seitlichen Schnittdarstellungen der Figur 5 ist, insbesondere auch beim Vergleich des fünften und sechsten Stadiums oder Verfahrensschritts erkennbar, dass die zusätzliche Verformung der Stirnseite 6 des Schaftes 5 keinen oder nur einen vernachlässigbaren Beitrag zur Ausbildung des Hinterschnitts 15 beiträgt. Die Verformung im Bereich der Stirnseite 6 dient vielmehr der Zentrierung des Rohlings 3 für die nachfolgenden Bearbeitungs- oder Verformungsschritte sowie zur Vorbereitung der Ausbildung des Einschraublochs bzw. der Einschrauböffnung 23, welche durch eine entsprechende Auslochung oder Ausstanzung gemäß der Darstellung des letzten Stadiums der Figur 5 erzeugt wird.

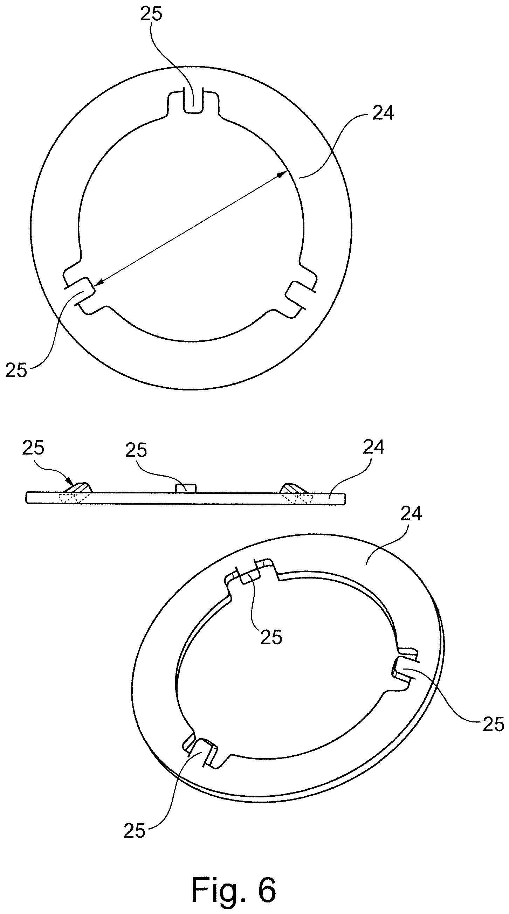

Fig. 6 zeigt unterschiedliche Ansichten eine Unterlegscheibe 24 oder Gleitscheibe, die zusammen mit einem Schraubelementrohling 3 gemäß der Fig. 4 und 5 zu einer Mutter, zusammengefügt werden kann, bei der die Unterlegscheibe 24, im Bereich des Schafts 5 verlustsicher angeordnet ist. In der Seitenansicht auf die Unterlegscheibe 24 ist erkennbar, dass die radial nach innen gerichteten, im Innenumfang ausgebildeten, teileweise zurückgesetzten Nasen 25 nach oben oder aus der Scheibenebene heraus gebogen sind. Durch diese Verformung der Nasen oder im verformten Zustand der Nasen wird erreicht, dass ein einheitlicher Innendurchmesse auch im Bereich der Nasen 25 oder sogar ein Innendurchmesser im Bereich der Nasen 25 erreichet wird, der geringfügig größer ausfällt als der sonstige Innendurchmesser der Unterlegscheibe. Dies ist beispielsweise in der oberen Draufsicht auf die Unterlegscheibe 24 der Fig. 6 erkennbar.

Im verformten Zustand der Nasen 25 ist der Innendurchmesser jedoch an jeder Stelle so gewählt, dass dieser wenigstens geringfügig größer ausfällt als der aufgeweitete Abschnitt eines entsprechenden Schraubelements oder Rohlings. Damit kann die Unterlegscheibe über diesen Abschnitt des Schaftes gestreift werden und bis an den Kopf heran oder bis in den Bereich des Hinterschnitts bewegt werden. Sobald die Unterlegscheibe im Bereich des Hinterschnitts angeordnet ist, kann durch ein Verformungswerkzeug eine Verformung, insbesondere Rückverformung der Nasen 25 in die Ebene der Unterlegscheibe hinein oder zurück erfolgen, wodurch diese dann einen im Bereich der Nasen 25 ausgebildeten verringerten Innendurchmesser realisieren.

Dadurch wird der Innendurchmesser der Unterlegscheibe 24 durch das zurückverformen der Nasen 25 zumindest abschnittsweise kleiner ausgebildet ist, als der Außendurchmesser des aufgeweiteten Bereichs 16 des Schafts 5. Dadurch wird die verlustsichere Anordnung der Unterlegscheibe an dem Schraubelement 3, insbesondere an der Mutter, gewährleistet.

### Bezugszeichen

- 1: Werkzeug
- 2: Werkzeugteile
- 2.1: Aufnahmewerkzeugteil
- 2.2: Aufnahmewerkzeugteil
- 2.3: Stößel
- 2.4: Verformungswerkzeugteil, radial
- 3: Rohling
- 4: Kopf/Schraubenkopf
- 5: Schaft
- 6: Stirnseite
- 7: Sackloch
- 8: Stempel
- 9: Unterseite
- 10: Dichtfläche
- 11: Oberseite
- 12: Endabschnitt
- 13: erster Abschnitt
- 14: zweiter Abschnitt
- 15: Hinterschnitt
- 16: Bereich
- 17: dritter Abschnitt
- 18: Boden
- 20: Außenumfang
- 21: Außenwerkzeugangriff
- 22: Grat
- 23: Einschrauböffnung
- 24: Unterlegscheibe
- 25: Nase
- A: axiale Richtung
- Q1: erster Querschnitt
- Q2: zweiter Querschnitt

## Patentansprüche

1. Verfahren zur Herstellung eines Schraubelements oder eines Schraubelementrohlings (3) umfassend einen Verfahrensschritt, in dem ein Rohling (3) mit einem an einem Kopf (4) angeformten zylindrischen Schaft (5) erzeugt wird und wobei in dem Rohling (3) von einer von dem Schaft (5) abgewandten Oberseite (11) des Kopfes (4) in einem, insbesondere weiteren, Verfahrensschritt ein Sackloch (7) ausgebildet wird, welches sich in Richtung des Schafts (5) erstreckt und welches zumindest einen ersten Abschnitt (13), insbesondere mit einem mehreckigen Querschnitt (Q1), bevorzugt zur Aufnahme eines Schraubwerkzeugs ausbildet oder mit einem runden Querschnitt (Q1), bevorzugt als Vorstufe einer Einschrauböffnung (23) ausbildet, und **dadurch gekennzeichnet,**
**dass** in einem nachgeordneten Verfahrensschritt das Sackloch (7) unter Ausbildung zumindest eines zweiten (14), an den ersten Abschnitt (13) angrenzenden Abschnitt vertieft wird, wobei der zweite Abschnitt (14) einen, bevorzugt zumindest abschnittsweise gleichbleibenden, insbesondere gegenüber dem ersten Querschnitt (Q1) kleineren, Querschnitt (Q2) ausbildet, wobei in dem nachgeordneten Verfahrensschritt der Schaft (5) unter Ausbildung eines Hinterschnitts (15) am Übergang zwischen Schaft (5) und Kopf (4) durch zumindest mittelbare Materialverdrängung aus zumindest dem zweiten Abschnitt (14) des Sacklochs (7), abschnittsweise aufgeweitet wird.

2. Verfahren nach Anspruch 1,
**dadurch gekennzeichnet,**
**dass** der Schaft (5) zumindest in einem dem Kopf (4) gegenüberliegenden Bereich (16) aufgeweitet wird.

3. Verfahren nach Anspruch 1 oder 2,
**dadurch gekennzeichnet,**
**dass** nach Abschluss des nachgeordneten Verfahrensschritts ein Teil des aufgeweiteten Abschnitts (16) an einem radialen Verformungswerkzeug oder -Werkzeugteil (2.4) anliegt, wohingegen der den Hinterschnitt (15) ausbildenden Teil des Schaftes (5) gegenüber dem radialen Verformungswerkzeug oder -Werkzeugteil (2.4) einen axial in Richtung des Kopfes (4) zunehmenden Abstand ausbildet.

4. Verfahren nach einem der Ansprüche 1 bis 3,
**dadurch gekennzeichnet,**
**dass** im Rahmen des nachgeordneten Verfahrensschrittes eine vom Kopf (4) abgewandte ebene Stirnfläche des Schaftes (5) oder eine mit einem sich axial von der Stirnfläche weg erstreckenden Fortsatz versehene Stirnfläche des Schaftes (5) beibehalten oder ausgebildet wird.

5. Verfahren nach einem der Ansprüche 1 bis 4,
**dadurch gekennzeichnet,**
**dass** an einer dem Schaft (5) zugewandten Unterseite (9) des Kopfes (4) eine ringförmige Dichtfläche (10) zur Anlage an einer Auflagefläche eines Aufnahmekörpers unter Ausbildung einer koaxialen Ringnut, welche radial nach außen von einer umlaufenden Ringwand begrenzt ist, geformt wird.

6. Verfahren nach einem der Ansprüche 1 bis 3,
**dadurch gekennzeichnet,**
**dass** im Bereich des Hinterschnitts (15) eine Unterlegscheibe angeordnet wird, wobei die Unterlegscheibe so verformt wird, dass nach der Verformung der Innendurchmesser geringfügig größer ist als der Außendurchmesser des Hinterschnitts und kleiner ist als der Ausßendurchmesser des aufgeweiteten Abschnitts (16) des Schafts (5).

7. Verfahren nach einem der Ansprüche 1 bis 6,
**dadurch gekennzeichnet,**
**dass** im nachgeordneten Verfahrensschritt eine maximale Aufweitung von 2% bis 9%, insbesondere von 5% bis 7%, gegenüber dem Schaftdurchmesser erzeugt wird.

8. Verfahren nach einem der Ansprüche 1 bis 7,
**dadurch gekennzeichnet,**
**dass** das Sackloch (7) derart ausgebildet wird, dass sich ein Boden (18) des, insbesondere zweiten Abschnitts (14) des, Sacklochs (7), nach Durchführung des nachgeordneten Verfahrensschritts, ausgehend von Oberseite (11) des Kopfes (4) bis zu 80%, bevorzugt 75%, besonders bevorzugt bis zu 70%, weiter bevorzugt bis zu 45%, der Gesamthöhe des Schraubelements erstreckt.

9. Verfahren nach einem der Ansprüche 1 bis 8,
**dadurch gekennzeichnet,**
**dass** der erste Abschnitt (13) des Sacklochs (7) so ausgebildet wird, sich ein Boden des ersten Abschnitts (13) des Sacklochs (7), ausgehend von Oberseite (11) des Kopfes (4) bis zu 70%, bevorzugt 65%, besonders bevorzugt bis zu 40% der Gesamthöhe des Schraubelements erstreckt.

10. Verfahren nach einem der Ansprüche 1 bis 3 oder 6 bis 9,
**dadurch gekennzeichnet,**
**dass** die Ausbildung des ersten Abschnitts des Sacklochs in zwei oder mehr Teilschritten ausgeführt wird, wobei bevorzugt in einem ersten Teilschritt 70%, weiter bevorzugt 80%, der Gesamttiefe des Sacklochs hergestellt werden.

11. Verfahren nach einem der Ansprüche 1 bis 5 oder 7 bis 9,
**dadurch gekennzeichnet,**
**dass** das im Rahmen des nachgeordneten Verfahrensschritts der zweite Abschnitt (14) des Sacklochs (7) derart ausgebildet wird, dass ein Boden (18) des, insbesondere zweiten Abschnitts (14) des, Sacklochs (7) in axialer Richtung (A) in einem Bereich (16) maximaler radialer Aufweitung ausgebildet wird.

12. Verfahren nach einem der Ansprüche 1 bis 3 oder 6 bis 10,
**dadurch gekennzeichnet,**
**dass** zur Herstellung eines Schraubelement in Form einer Mutter oder einer Schraubenmutter ein Boden (18) des, insbesondere zweiten Abschnitts (14) des, Sacklochs (7) in axialer Richtung (A) im Kopf (4) ausgebildet wird.

13. Verfahren nach einem der Ansprüche 1 bis 5, 7 bis 9 oder 11,
**dadurch gekennzeichnet,**
**dass** der Schaft (5), insbesondere die Schaftoberfläche, insbesondere mittels nicht-spanender Bearbeitung, besonders bevorzugt durch Rollen oder Walzen, mit einem Gewinde versehen wird, wobei das Gewinde relativ zur Aufweitung und zum Hinterschnitt (15) so ausgebildet wird, dass das Gewinde im Bereich des Hinterschnitts (15) vollständig ausläuft.

14. Verfahren nach einem der Ansprüche 1 bis 3, 6 bis 10 oder 12,
**dadurch gekennzeichnet,**
**dass** in einem Locherzeugungsschritt das Material zwischen Boden des zweiten Abschnitts (14) und einer vom Kopf (4) abgewandten Stirnfläche des Schaftes (5), insbesondere unter Beibehaltung des Hinterschnitts, ausgelocht oder ausgestanzt wird.

15. Verfahren nach Anspruch 14,
**dadurch gekennzeichnet,**
**dass** in dem im Locherzeugungsschritt erzeugten Loch, insbesondere mittels spanender Bearbeitung, ein Innengewinde erzeugt wird, welches sich bevorzugt vom Kopf (4) bis zu einer vom Kopf (4) abgewandten Stirnfläche des Schaftes (5) erstreckt.

16. Verfahren nach einem der Ansprüche 1 bis 3, 6 bis 10, 12, 14 oder 15,
**dadurch gekennzeichnet,**
**dass** in einem Verfahrensschritt, bevorzugt nach der Ausbildung des ersten Abschnitts des Sacklochs im Bereich des Kopfs (4), ein Außenwerkzeugangriff, insbesondere ein Außenvielzahn, ausgebildet wird, der sich bevorzugt, zumindest nach einem nachfolgenden Abgratvorgang über die gesamte Höhe des Kopfes (4) erstreckt.

17. Schraubelementrohling, insbesondere hergestellt nach einem Verfahren nach Anspruch 11, der einen Kopf (4) und einem an dem Kopf (4) angeformten zylindrischen Schaft (5) aufweist, wobei sich ausgehend vom Kopf (4) ein Sackloch (7) in Richtung des Schaftes (5) erstreckt, welches zumindest einen ersten Abschnitt (13), insbesondere mit einem mehreckigen Querschnitt (Q1), bevorzugt zur Aufnahme eines Schraubwerkzeugs oder einem runden Querschnitt (Q1) bevorzugt als Vorstufe einer Einschrauböffnung (23), und wobei der Schaft (5) am Übergang zum Kopf (4) einen Hinterschnitt (15) aufweist,
**dadurch gekennzeichnet,**
**dass** das Sackloch (7) einen zweiten, an den ersten Abschnitt (13) angrenzenden Abschnitt (14) aufweist, wobei der zweite Abschnitt (14) einen, bevorzugt zumindest abschnittsweise gleichbleibenden, insbesondere gegenüber dem ersten Querschnitt (Q1) kleineren, Querschnitt (Q2) aufweist, wobei der Hinterschnitt (15) am Übergang zwischen Schaft (5) und Schraubenkopf (4) von einer durch zumindest mittelbare Materialverdrängung aus zumindest dem zweiten Abschnitt (14) des Sacklochs (7), abschnittsweise ausgebildeten Aufweitung des Schaftes (5) gebildet ist, wobei ein Boden (18) des zweiten Abschnitts (14) des Sacklochs (7) in axialer Richtung (A) in einem Bereich (16) maximaler radialer Aufweitung verläuft, wobei eine gleichmäßige Flanke als Übergang zwischen einem aufgeweiteten und einem nicht aufgeweiteten Bereich des Durchmessers des Schaftes ausgebildet ist.

18. Schraubelementrohling nach Anspruch 17,
**dadurch gekennzeichnet,**
**dass** der Schaft (5) zumindest in einem dem Schraubenkopf (4) gegenüberliegenden Bereich (16) die Aufweitung aufweist.

19. Schraubelementrohling nach Anspruch 17 oder 18,
**gekennzeichnet durch**
eine vom Kopf (4) abgewandt ebene Stirnfläche des Schaftes (5) oder eine mit einem sich axial von der Stirnfläche weg erstreckenden Fortsatz versehene Stirnfläche des Schaftes (5).

20. Schraubelementrohling nach einem der Ansprüche 17 bis 19,
**gekennzeichnet durch**
eine an einer dem Schaft (5) zugewandten Unterseite (9) des Kopfes (4) ausgebildete ringförmige Dichtfläche (10) zur Anlage an einer Auflagefläche eines Aufnahmekörpers unter Ausbildung einer koaxialen Ringnut, welche radial nach außen von einer umlaufenden Ringwand begrenzt ist.

21. Schraubelementrohling nach einem der Ansprüche 17 bis 20,
**dadurch gekennzeichnet,**
**dass** eine maximale Aufweitung von 2% bis 9%, insbesondere von 5% bis 7% gegenüber dem Schaftdurchmesser, insbesondere am Übergang zum Kopf (4), beträgt.

22. Schraubelementrohling nach einem der Ansprüche 17 bis 21,
**dadurch gekennzeichnet,**
**dass** sich ein Boden (18) des, insbesondere zweiten Abschnitts (14) des, Sacklochs (7), ausgehend von Oberseite (11) des Kopfes (4) bis zu 80%, bevorzugt 75%, besonders bevorzugt bis zu 70% der Gesamthöhe der Schraube erstreckt.

23. Schraubelementrohling nach einem der Ansprüche 17 bis 22,
**dadurch gekennzeichnet,**
**dass** das Sackloch (7) einen dritten (17), an den zweiten Abschnitt (14) angrenzenden Abschnitt aufweist, der konzentrisch zum ersten (13) und/oder zweiten Abschnitt (14) ausgebildet ist und ein Kegelsegment ausbildet, welches sich in Richtung (A) des Schaftes (5) verjüngt und insbesondere in einem ebenen, parallel zur Oberseite (11) verlaufenden Boden (18) des Sacklochs (7) mündet.

24. Schraubelement, insbesondere Dichtschraube,
**dadurch gekennzeichnet,**
**dass** sie aus einem Schraubelementrohling nach einem der Ansprüche 17 bis 23 hergestellt ist, wobei das Schraubelement einen Kopf (4) und einem an dem Kopf (4) angeformten zylindrischen Schaft (5) aufweist, wobei sich ausgehend vom Kopf (4) ein Sackloch (7) in Richtung des Schaftes (5) erstreckt, welches zumindest einen ersten Abschnitt (13), insbesondere mit einem mehreckigen Querschnitt (Q1), bevorzugt zur Aufnahme eines Schraubwerkzeugs und wobei der Schaft (5) am Übergang zum Kopf (4) einen Hinterschnitt (15) aufweist, wobei das Sackloch (7) einen zweiten, an den ersten Abschnitt (13) angrenzenden Abschnitt (14) aufweist, wobei der zweite Abschnitt (14) einen, bevorzugt zumindest abschnittsweise gleichbleibenden, insbesondere gegenüber dem ersten Querschnitt (Q1) kleineren, Querschnitt (Q2) aufweist, wobei der Hinterschnitt (15) am Übergang zwischen Schaft (5) und Schraubenkopf (4) von einer durch zumindest mittelbare Materialverdrängung aus zumindest dem zweiten Abschnitt (14) des Sacklochs (7), abschnittsweise ausgebildeten Aufweitung des Schaftes (5) gebildet ist, wobei ein Boden (18) des zweiten Abschnitts (14) des Sacklochs (7) in axialer Richtung (A) in einem Bereich (16) maximaler radialer Aufweitung verläuft, wobei eine gleichmäßige Flanke als Übergang zwischen einem aufgeweiteten und einem nicht aufgeweiteten Bereich des Durchmessers des Schaftes ausgebildet ist wobei der Schaft (5), insbesondere die Schaftoberfläche, ein Gewinde, insbesondere ein Außengewinde, aufweist, wobei das Gewinde relativ zur Aufweitung und zum Hinterschnitt (15) so ausgebildet wird, dass das Gewinde im Bereich des Hinterschnitts (15) vollständig ausläuft.

## Claims

1. A method for producing a screw element or a screw element blank (3), the method comprising a step of producing a blank (3) having a cylindrical shaft (5) formed on a head (4), and a blind hole (7) being formed in the blank (3) from an upper side (11) of the head (4) facing away from the shaft (5) in a, in particular further, method step, the blind hole (7) extending toward the shaft (5) and forming at least one first section (13), in particular having a polygonal cross section (Q1), preferably for receiving a screw tool or having a round cross section (Q1), preferably as a precursor of a screw opening (23), and
**characterized in that**
the blind hole (7) is deepened, thus forming at least one second section (14), which borders the first section (13), in a subsequent method step, the second section (14) forming a preferably at least partially continuous cross section (Q2) which is in particular smaller in size than the first cross section (Q1), the shaft (5) being widened in sections, thus forming an undercut (15) at the crossover between the shaft (5) and the head (4), by at least indirectly displacing material from at least the second section (14) of the blind hole (7), in the subsequent method step.

2. The method according to claim 1,
**characterized in that**
the shaft (5) is widened at least in an area (16) opposite the head (4).

3. The method according to claim 1 or 2,
**characterized in that**
a part of the widened section (16) abuts against a radial deforming tool or tool part (2.4) after the subsequent method step has been executed, whereas the part of the shaft (5) forming the undercut (15) forms a distance axially increasing toward the head (4) with respect to the radial deforming tool or tool part (2.4).

4. The method according to any one of the claims 1 to 3,
**characterized in that**
a flat end face of the shaft (5) facing away from the head (4) or an end face of the shaft (5) which is equipped with a protrusion axially extending away from the end face remains or is formed in the scope of the subsequent method step.

5. The method according to any one of the claims 1 to 4,
**characterized in that**
an annular sealing surface (10) is formed on an underside (9) of the head (4) facing the shaft (5) for being abutted against an abutment surface of a receiving body, thus forming a coaxial annular groove, which is bordered radially outward by an encircling annular wall.

6. The method according to any one of the claims 1 to 3,
**characterized in that**
a washer is disposed in the area of the undercut (15), the washer being deformed such that the inner diameter is slightly larger than the outer diameter of the undercut and is smaller than the outer diameter of the widened section (16) of the shaft (5) after having been deformed.

7. The method according to any one of the claims 1 to 6,
**characterized in that**
a maximum widening of 2 % to 9 %, in particular of 5 % to 7 %, with respect to the shaft diameter is produced in the subsequent method step.

8. The method according to any one of the claims 1 to 7,
**characterized in that**
the blind hole (7) is realized in such a manner that a bottom (18) of the, in particular second section (14) of the, blind hole (7) extends up to 80 %, preferably 75 %, particularly preferably up to 70 %, even more preferably up to 45 %, of the overall height of the screw element starting from the upper side (11) of the head (4) after the subsequent method step has been executed.

9. The method according to any one of the claims 1 to 8,
**characterized in that**
the first section (13) of the blind hole (7) is realized in such a manner that a bottom of the first section (13) of the blind hole (7) extends up to 70 %, preferably 65 %, particularly preferably up to 40 %, of the overall height of the screw element starting from the upper side (11) of the head (4).

10. The method according to any one of the claims 1 to 3 or 6 to 9,
**characterized in that**
the first section of the blind hole is formed in two or more partial steps, preferably 70 %, particularly preferably 80 %, of the overall depth of the blind hole being produced in a first partial step.

11. The method according to any one of the claims 1 to 5 or 7 to 9,
**characterized in that**
the second section (14) of the blind hole (7) is produced in such a manner in the scope of the subsequent method step that a bottom (18) of the, in particular second section (14) of the, blind hole (7) is formed in the axial direction (A) in an area (16) of maximum radial widening.

12. The method step according to any one of the claims 1 to 3 or 6 to 10,
**characterized in that**
a bottom (18) of the, in particular second section (14) of the, blind hole (7) is formed in the axial direction (A) in the head (4) for the production of a screw element in the form of a nut or a screw nut.

13. The method step according to any one of the claims 1 to 5, 7 to 9 or 11,
**characterized in that**
the shaft (5), in particular the shaft surface, is equipped with a thread in particular by means of non-machining methods, particularly preferably by means of rolling or milling, the thread being realized in such a manner relative to the widened portion and to the undercut (15) that the thread completely tapers off in the area of the undercut (15).

14. The method according to any one of the claims 1 to 3, 6 to 10 or 12, **characterized in that**
the material between the bottom of the second section (14) and an end face of the shaft (5) facing away from the head (4) is punched or stamped, in particular while maintaining the undercut, in a step for producing a hole.

15. The method according to claim 14,
**characterized in that**
an internal thread, which extends preferably from the head (4) to an end face of the shaft (5) facing away from the head (4), is produced, in particular by machining, in the hole produced in the step for producing the hole.

16. The method according to any one of the claims 1 to 3, 6 to 10, 12, 14 or 15,
**characterized in that**
an outer tool engagement portion, in particular an outer spline, is formed in a method step, preferably after having formed the first section of the blind hole in the area of the head (4), the outer tool engagement portion preferably extending across the entire height of the head (4) at least after a subsequent deburring process.

17. A screw element blank, in particular produced according to a method according to claim 11, the screw element blank comprising a head (4) and a cylindrical shaft (5) formed on the head (4), a blind hole (7) extending toward the shaft (5) starting from the head (4) and having at least one first section (13), in particular having a polygonal cross section (Q1), preferably for receiving a screw tool or having a round cross section (Q1) preferably as a precursor of a screw opening (23), and the shaft (5) comprising an undercut (15) at the crossover to the head (4),
**characterized in that**
the blind hole (7) comprises a second section (14) bordering on the first section (13), the second section (14) having a preferably at least partially continuous cross section (Q2) which is in particular smaller in size than the first cross section (Q1), the undercut (15) being formed by a widened portion formed on part of the shaft (5) by at least indirectly displacing material from at least the second section (14) of the blind hole (7) at the crossover between the shaft (5) and the screw head (4), a bottom (18) of the second section (14) of the blind hole (7) extending in the axial direction (A) in an area (16) of maximum radial widening, an even flank being formed as the crossover between a widened and a not widened area of the diameter of the shaft.

18. The screw element blank according to claim 17,
**characterized in that**
the shaft (5) has the widened portion at least in an area (16) opposite the screw head (4).

19. The screw element blank according to claim 17 or 18,
**characterized by**
a flat end face of the shaft (5) facing away from the head (4) or an end face of the shaft (5) which is equipped with a protrusion axially extending away from the end face.

20. The screw element blank according to any one of the claims 17 to 19, **characterized by**
an annular sealing surface (10), which is formed on an underside (9) of the head (4) facing the shaft (5), for being abutted against an abutment surface of a receiving body, thus forming a coaxial annular groove, which is bordered radially outward by an encircling annular wall.

21. The screw element blank according to any one of the claims 17 to 20, **characterized in that**
a maximum widening is 2 % to 9 %, in particular 5 % to 7 %, with respect to the shaft diameter, in particular at the crossover to the head (4).

22. The screw element blank according to any one of the claims 17 to 21, **characterized in that**
a bottom (18) of the, in particular second section (14) of the, blind hole (7) extends up to 80 %, preferably 75 %, particularly preferably up to 70 %, of the overall height of the screw starting from the upper side (11) of the head (4).

23. The screw element blank according to any one of the claims 17 to 22, **characterized in that**
the blind hole (7) comprises a third section (17), which borders the second section (14), the third section (17) being concentric to the first and/or second section (13, 14) and forming a cone segment, which tapers in the direction (A) of the shaft (5) and ends in particular in a flat bottom (18) of the blind hole (7) extending parallel to the upper side (11).

24. A screw element, in particular a gland,
**characterized in that**
it is produced from a screw element blank according to any one of the claims 17 to 23, the screw element comprising a head (4) and a cylindrical shaft (5) formed on the head (4), a blind hole (7) extending toward the shaft (5) starting from the head (4) and having at least one first section (13), in particular having a polygonal cross section (Q1), preferably for receiving a screw tool, and the shaft (5) comprising an undercut (15) at the crossover to the head (4), the blind hole (7) comprising a second section (14) bordering on the first section (13), the second section (14) having a preferably at least partially continuous cross section (Q2) which is in particular smaller in size than the first cross section (Q1), the undercut (15) being formed by a widened portion formed on part of the shaft (5) by at least indirectly displacing material from at least the second section (14) of the blind hole (7) at the crossover between the shaft (5) and the screw head (4), a bottom (18) of the second section (14) of the blind hole (7) extending in the axial direction (A) in an area (16) of maximum radial widening, an even flank being formed as the crossover between a widened and a not widened area of the diameter of the shaft, the shaft (5), in particular the shaft surface, having a thread, in particular an outer thread, the thread being realized in such a manner relative to the widened portion and to the undercut (15) that the thread completely tapers off in the area of the undercut (15).

## Revendications

1. Procédé pour la production d'un élément de vissage ou d'une ébauche (3) d'élément de vissage, ledit procédé comprenant une étape de procédé dans laquelle une ébauche (3) ayant une tige cylindrique (5) formée sur une tête (4) est générée, et un trou borgne (7) étant formé dans l'ébauche (3) à partir d'un côté supérieur (11) de la tête (4) détourné de la tige (5) dans une étape de procédé, notamment supplémentaire, ledit trou borgne (7) s'étendant dans la direction de la tige (5) et formant au moins une première section (13), notamment ayant une section transversale (Q1) polygonale, de préférence pour recevoir un outil de vissage ou ayant une section transversale (Q1) ronde, de préférence comme précurseur d'une ouverture de vissage (23), et
**caractérisé en ce que**
le trou borgne (7) est approfondi en formant au moins une deuxième section (14) adjacente à la première section (13) dans une étape de procédé suivante, la deuxième section (14) formant une section transversale (Q2) qui est de préférence au moins constante par sections et qui est notamment inférieure par rapport à la première section transversale (Q1), la tige (5) étant élargie par sections en formant une contre-dépouille (15) à la jonction entre la tige (5) et la tête (4) en déplaçant au moins indirectement du matériau d'au moins la deuxième section (14) du trou borgne (7) dans l'étape de procédé suivante.

2. Procédé selon la revendication 1,
**caractérisé en ce que**
la tige (5) est élargie au moins dans une zone (16) opposée à la tête (4).

3. Procédé selon la revendication 1 ou 2,
**caractérisé en ce**
**qu'**une partie de la section élargie (16) prend appui contre un outil ou une partie d'outil (2.4) de déformation radiaux après l'achèvement de l'étape de procédé suivante tandis que la partie de la tige (5) formant la contre-dépouille (15) forme une distance augmentant axialement vers la tête (4) par rapport à l'outil ou la partie d'outil (2.4) de déformation radiaux.

4. Procédé selon l'une quelconque des revendications 1 à 3,
**caractérisé en ce**
**qu'**une face frontale plane de la tige (5) détournée de la tête (4) ou une face frontal de la tige (5) pourvue d'un prolongement s'étendant axialement de manière à se détourner de la face frontale sont maintenues ou formées dans le cadre de l'étape de procédé suivante.

5. Procédé selon l'une quelconque des revendications 1 à 4,
**caractérisé en ce**
**qu'**une surface d'étanchéité (10) annulaire formée sur un côté inférieur (9) de la tête (4) orienté vers la tige (5) pour venir en contact avec une surface d'appui d'un corps de réception en formant une rainure annulaire coaxiale qui est délimitée radialement vers l'extérieur par une paroi annulaire périphérique.

6. Procédé selon l'une quelconque des revendications 1 à 3,
**caractérisé en ce**
**qu'**une rondelle est disposée dans la zone de la contre-dépouille (15), la rondelle étant déformée de manière que le diamètre intérieur est légèrement supérieure au diamètre extérieur de la contre-dépouille et est inférieur au diamètre extérieur de la section élargie (16) de la tige (5) après la déformation.

7. Procédé selon l'une quelconque des revendications 1 à 6,
**caractérisé en ce**
**qu'**un élargissement maximal de 2 % à 9 %, notamment de 5 % à 7 %, par rapport au diamètre de la tige est généré dans l'étape de procédé suivante.

8. Procédé selon l'une quelconque des revendications 1 à 7,
**caractérisé en ce que**
le trou borgne (7) est réalisé de manière qu'un fond (18) de la, notamment deuxième section (14) du trou borgne (7) s'étend jusqu'à 80 %, de préférence 75 %, de manière particulièrement préférée jusqu'à 70 %, plus préférentiellement jusqu'à 45 %, de la hauteur totale de l'élément de vissage à partir du côté supérieur (11) de la tête (4) après l'exécution de l'étape de procédé suivante.

9. Procédé selon l'une quelconque des revendications 1 à 8,
**caractérisé en ce que**
la première section (13) du trou borgne (7) est réalisée de manière qu'un fond de la première section (13) du trou borgne (7) s'étend jusqu'à 70 %, de préférence 65 %, de manière particulièrement préférée jusqu'à 40 %, de la hauteur totale de l'élément de vissage à partir du côté supérieur (11) de la tête (4).

10. Procédé selon l'une quelconque des revendications 1 à 3 ou 6 à 9,
**caractérisé en ce que**
la formation de la première section du trou borgne est effectuée en deux ou plusieurs étapes partielles, de préférence, 70 %, plus préférentiellement 80 %, de la profondeur totale du trou borgne étant produite dans une première étape partielle.

11. Procédé selon l'une quelconque des revendications 1 à 5 ou 7 à 9, **caractérisé en ce que**
la deuxième section (14) du trou borgne (7) est réalisée de telle manière dans le cadre de l'étape de procédé suivante qu'un fond (18) de la, notamment deuxième section (14) du trou borgne (7) est formé dans la direction axiale (A) dans une zone (16) d'un élargissement radial maximal.

12. Procédé selon l'une quelconque des revendications 1 à 3 ou 6 à 10, **caractérisé en ce**
**qu'**un fond (18) de la, notamment deuxième section (14) du trou borgne (7) est formé dans la direction axiale (A) dans la tête (4) pour produire un élément de vissage sous la forme d'un écrou ou d'un écrou de vis.

13. Procédé selon l'une quelconque des revendications 1 à 5, 7 à 9 ou 11, **caractérisé en ce que**
la tige (5), notamment la surface de la tige, est pourvue d'un filet, notamment au moyen de procédés sans usinage par enlèvement de copeaux, de manière particulièrement préférée, au moyen de roulement ou de laminage, le filet étant réalisé par rapport à l'élargissement et à la contre-dépouille (15) de manière que le filet se termine complètement dans la zone de la contre-dépouille (15).

14. Procédé selon l'une quelconque des revendications 1 à 3, 6 à 10 ou 12,
**caractérisé en ce que**
le matériau entre le fond de la deuxième section (14) et une face frontale de la tige (5) détournée de la tête (4) est poinçonné ou estampé, notamment en maintenant la contre-dépouille, dans une étape de génération d'un trou.

15. Procédé selon la revendication 14,
**caractérisé en ce**
**qu'**un filetage femelle, qui s'étend, de préférence, de la tête (4) à une face frontale de la tige (5) détournée de la tête (4), est généré, notamment au moyen d'usinage par enlèvement de copeaux, dans le trou généré dans l'étape de génération du trou.

16. Procédé selon l'une quelconque des revendications 1 à 3, 6 à 10, 12, 14 ou 15,
**caractérisé en ce**
**qu'**une partie de prise d'outil, notamment une polygone extérieure, est formée dans une étape de procédé, de préférence après la formation de la première section du trou borgne dans la zone de la tête (4), ladite partie de prise d'outil s'étendant, de préférence, sur toute la hauteur de la tête (4) au moins après un processus d'ébarbage suivant.

17. Ébauche d'élément de vissage, notamment produite selon un procédé selon la revendication 11, ladite ébauche d'élément de vissage ayant une tête (4) et une tige cylindrique (5) formée sur la tête (4), un trou borgne (7) s'étendant à partir de la tête (4) vers la tige (5) et ayant au moins une première section (13), notamment ayant une section transversale (Q1) polygonale, de préférence pour recevoir un outil de vissage ou ayant une section transversale (Q1) ronde, de préférence comme précurseur d'une ouverture de vissage (23), et la tige (5) ayant une contre-dépouille (15) à la jonction avec la tête (4),
**caractérisée en ce que**
le trou borgne (7) a une deuxième section (14) adjacente à la première section (13), la deuxième section (14) formant une section transversale (Q2) qui est de préférence au moins constante par sections et qui est notamment inférieure par rapport à la première section transversale (Q1), la contre-dépouille (15) étant formée par un élargissement formé sur une partie de la tige (5) à la jonction entre la tige (5) et la tête de vis (4) en déplaçant au moins indirectement du matériau d'au moins la deuxième section (14) du trou borgne (7), un fond (18) de la deuxième section (14) du trou borgne (7) s'étendant dans la direction axiale (A) dans une zone (16) d'un élargissement radial maximal, un flanc uniforme étant formé comme jonction entre une zone élargie et une zone non élargie du diamètre de la tige.

18. Ébauche d'élément de vissage selon la revendication 17,
**caractérisée en ce que**
la tige (5) a l'élargissement au moins dans une zone (16) opposée à la tête de vis (4).

19. Ébauche d'élément de vissage selon la revendication 17 ou 18,
**caractérisée par**
une face frontale plane de la tige (5) détournée de la tête (4) ou une face frontal de la tige (5) pourvue d'un prolongement s'étendant axialement à partir de la face frontale.

20. Ébauche d'élément de vissage selon l'une quelconque des revendications 17 à 19,
**caractérisée par**
une surface d'étanchéité (10) annulaire formée sur un côté inférieur (9) de la tête (4) orienté vers la tige (5) pour venir en contact avec une surface d'appui d'un corps de réception en formant une rainure annulaire coaxiale qui est délimitée radialement vers l'extérieur par une paroi annulaire périphérique.

21. Ébauche d'élément de vissage selon l'une quelconque des revendications 17 à 20,
**caractérisée en ce**
**qu'**un élargissement maximal est de 2 % à 9 %, notamment de 5 % à 7 %, par rapport au diamètre de la tige, notamment à la jonction avec la tête (4).

22. Ébauche d'élément de vissage selon l'une quelconque des revendications 17 à 21,
**caractérisée en ce**
**qu'**un fond (18) de la, notamment deuxième section (14) du trou borgne (7) s'étend jusqu'à 80 %, de préférence 75 %, de manière particulièrement préférée jusqu'à 70 %, de la hauteur totale de la vis à partir du côté supérieur (11) de la tête (4).

23. Ébauche d'élément de vissage selon l'une quelconque des revendications 17 à 22,
**caractérisée en ce que**
le trou borgne (7) a une troisième section (17) adjacente à la deuxième section (14), ladite troisième section (17) étant concentrique par rapport à la première section (13) et/ou la deuxième section (14) et formant un segment de cône qui se rétrécisse dans la direction (A) de la tige (5) et débouche notamment dans un fond (18) plan du trou borgne (7) qui s'étend parallèlement par rapport au côté supérieur (11).

24. Élément de vissage, notamment une vis d'étanchéité,
**caractérisé en ce**
**qu'**il est produit à partir d'une ébauche d'élément de vissage selon l'une quelconque des revendications 17 à 23, l'élément de vissage ayant une tête (4) et une tige cylindrique (5) formée sur la tête (4), un trou borgne (7) s'étendant à partir de la tête (4) vers la tige (5) et ayant au moins une première section (13), notamment ayant une section transversale (Q1) polygonale, de préférence pour recevoir un outil de vissage, et la tige (5) ayant une contre-dépouille (15) à la jonction avec la tête (4), le trou borgne (7) ayant une deuxième section (14) adjacente à la première section (13), la deuxième section (14) ayant une section transversale (Q2) qui est de préférence au moins constante par sections et qui est notamment inférieure par rapport à la première section transversale (Q1), la contre-dépouille (15) étant formée par un élargissement formé sur une partie de la tige (5) à la jonction entre la tige (5) et la tête de vis (4) en déplaçant au moins indirectement du matériau d'au moins la deuxième section (14) du trou borgne (7), un fond (18) de la deuxième section (14) du trou borgne (7) s'étendant dans la direction axiale (A) dans une zone (16) d'un élargissement radial maximal, un flanc uniforme étant formé comme jonction entre une zone élargie et une zone non élargie du diamètre de la tige, la tige (5), notamment la surface de la tige, ayant un filet, notamment un filetage mâle, le filet étant réalisé par rapport à l'élargissement et la contre-dépouille (15) de manière que le filet se termine complètement dans la zone de la contre-dépouille (15).
